(19) Europäisches Patentamt
European Patent Office
Office européen des brevets

(11) **EP 4 387 230 A1**

(12) **EUROPEAN PATENT APPLICATION**
published in accordance with Art. 153(4) EPC

(43) Date of publication:
**19.06.2024 Bulletin 2024/25**

(21) Application number: **22856208.8**

(22) Date of filing: **10.08.2022**

(51) International Patent Classification (IPC):
*H04N 19/597* (2014.01)    *H04N 19/513* (2014.01)
*H04N 19/132* (2014.01)    *H04N 19/119* (2014.01)
*H04N 19/105* (2014.01)    *G06T 9/00* (2006.01)

(52) Cooperative Patent Classification (CPC):
**G06T 9/00; H04N 19/105; H04N 19/119;**
**H04N 19/132; H04N 19/513; H04N 19/597**

(86) International application number:
**PCT/KR2022/011905**

(87) International publication number:
**WO 2023/018211 (16.02.2023 Gazette 2023/07)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **13.08.2021  KR 20210107028**

(71) Applicant: **LG Electronics Inc.**
**Yeongdeungpo-gu**
**Seoul 07336 (KR)**

(72) Inventors:
• **LEE, Sooyeon**
  **Seoul 06772 (KR)**
• **HUR, Hyejung**
  **Seoul 06772 (KR)**

(74) Representative: **Plasseraud IP**
**66, rue de la Chaussée d'Antin**
**75440 Paris Cedex 09 (FR)**

(54) **POINT CLOUD DATA TRANSMISSION METHOD, POINT CLOUD DATA TRANSMISSION DEVICE, POINT CLOUD DATA RECEPTION METHOD, AND POINT CLOUD DATA RECEPTION DEVICE**

(57)    A point cloud data transmission method according to embodiments may comprise the steps of: encoding point cloud data; and transmitting a bitstream including the point cloud data. In addition, a point cloud data transmission device according to embodiments may comprise: an encoder for encoding point cloud data; and a transmitter for transmitting a bitstream including the point cloud data.

FIG. 1

EP 4 387 230 A1

**Description**

[Technical Field]

Embodiments relate to a method and apparatus for processing point cloud content.

[Background Art]

Point cloud content is content represented by a point cloud, which is a set of points belonging to a coordinate system representing a three-dimensional space. The point cloud content may express media configured in three dimensions, and is used to provide various services such as virtual reality (VR), augmented reality (AR), mixed reality (MR), and self-driving services. However, tens of thousands to hundreds of thousands of point data are required to represent point cloud content. Therefore, there is a need for a method for efficiently processing a large amount of point data.

[Disclosure]

[Technical Problem]

Embodiments provide an apparatus and method for efficiently processing point cloud data. Embodiments provide a point cloud data processing method and apparatus for addressing latency and encoding/decoding complexity.
The technical scope of the embodiments is not limited to the aforementioned technical objects, and may be extended to other technical objects that may be inferred by those skilled in the art based on the entire contents disclosed herein.

[Technical Solution]

To achieve these objects and other advantages and in accordance with the purpose of the disclosure, as embodied and broadly described herein, a method of transmitting point cloud data may include encoding point cloud data, and transmitting a bitstream containing the point cloud data. In another aspect of the present disclosure, a method of receiving point cloud data may include receiving a bitstream including point cloud data, and decoding the point cloud data.

[Advantageous Effects]

Apparatuses and methods according to embodiments may process point cloud data with high efficiency.
The apparatuses and methods according to the embodiments may provide a high-quality point cloud service.
The apparatuses and methods according to the embodiments may provide point cloud content for providing general-purpose services such as a VR service and a self-driving service.

[Description of Drawings]

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts. In the drawings:

FIG. 1 shows an exemplary point cloud content providing system according to embodiments;
FIG. 2 is a block diagram illustrating a point cloud content providing operation according to embodiments;
FIG. 3 illustrates an exemplary process of capturing a point cloud video according to embodiments;
FIG. 4 illustrates an exemplary point cloud encoder according to embodiments;
FIG. 5 shows an example of voxels according to embodiments;
FIG. 6 shows an example of an octree and occupancy code according to embodiments;
FIG. 7 shows an example of a neighbor node pattern according to embodiments;
FIG. 8 illustrates an example of point configuration in each LOD according to embodiments;
FIG. 9 illustrates an example of point configuration in each LOD according to embodiments;
FIG. 10 illustrates a point cloud decoder according to embodiments;

FIG. 11 illustrates a point cloud decoder according to embodiments;

FIG. 12 illustrates a transmission device according to embodiments;

FIG. 13 illustrates a reception device according to embodiments;

FIG. 14 illustrates an exemplary structure operable in connection with point cloud data transmission/reception methods/devices according to embodiments;

FIG. 15 illustrates an example of frames according to embodiments;

FIG. 16 illustrates an example of a device/method for transmitting/receiving point cloud data according to embodiments;

FIG. 17 illustrates an example of a cylinder box of point cloud data according to embodiments;

FIG. 18 illustrates examples of a split cylinder box according to embodiments;

FIG. 19 illustrates examples of a split cylinder box according to embodiments;

FIG. 20 illustrates examples of a cylinder box subjected to further splitting according to embodiments;

FIG. 21 illustrates an example of point sampling in motion estimation according to embodiments;

FIG. 22 illustrates a method of sampling points in a motion estimation according to embodiments;

FIG. 23 illustrates an example of a search window used in motion estimation according to embodiments;

FIG. 24 illustrates an example of an azimuth and radius according to embodiments;

FIG. 25 shows an example of equations representing the range of a search window according to embodiments;

FIG. 26 illustrates an example of an encoded bitstream according to embodiments;

FIG. 27 shows an exemplary syntax of a sequence parameter set according to embodiments;

FIG. 28 shows an exemplary syntax of a geometry parameter set according to embodiments;

FIG. 29 shows an exemplary syntax of an attribute parameter set according to embodiments;

FIG. 30 is a flow diagram illustrating an exemplary method of processing point cloud data according to embodiments;

FIG. 31 is a flow diagram illustrating an exemplary method of processing point cloud data according to embodiments;

FIG. 32 is a flow diagram illustrating an exemplary method of transmitting point cloud data according to embodiments; and

FIG. 33 is a flow diagram illustrating an exemplary method of receiving point cloud data according to embodiments.

[Best Mode]

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that may be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

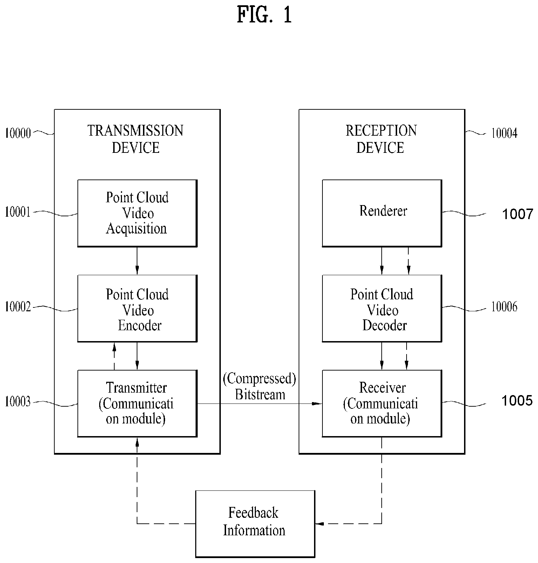

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquirer 10001, a point cloud video encoder 10002, and/or a transmitter (or communication module) 10003.

The point cloud video acquirer 10001 according to the embodiments acquires a point cloud video through a processing process such as capture, synthesis, or generation. The point cloud video is point cloud content represented by a point cloud, which is a set of points positioned in a 3D space, and may be referred to as point cloud video data. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (e.g., a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (e.g., a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component) separate from the receiver 10005.

The point cloud video decoder 10006 decodes the bitstream containing the point cloud video data. The point cloud video decoder 10006 may decode the point cloud video data according to the method by which the point cloud video data is encoded (e.g., in a reverse process to the operation of the point cloud video encoder 10002). Accordingly, the point cloud video decoder 10006 may decode the point cloud video data by performing point cloud decompression coding, which is the inverse process of the point cloud compression. The point cloud decompression coding includes G-PCC coding.

The renderer 10007 renders the decoded point cloud video data. The renderer 10007 may output point cloud content by rendering not only the point cloud video data but also audio data. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to embodiments is information about the user's head position, orientation, angle, motion, and the like. The reception device 10004 according to the embodiments may calculate the viewport information based on the head orientation information. The viewport information may be information about a region of a point cloud video that the user is viewing. A viewpoint is a point through which the user is viewing the point cloud video, and may refer to a center point of the viewport region. That is, the viewport is a region centered on the viewpoint, and the size and shape of the region may be determined by a field of view (FOV). Accordingly, the reception device 10004 may extract the viewport information based on a vertical or horizontal FOV supported by the device in addition to the head orientation information. Also, the reception device 10004 performs gaze analysis or the like to check the way the user consumes a point cloud, a region that the user gazes at in the point cloud video, a gaze time, and the like. According to embodiments, the reception device 10004 may transmit feedback information including the result of the gaze analysis to the transmission device 10000. The feedback information according to the embodiments may be acquired in the rendering and/or display process. The feedback information according to the embodiments may be secured by one or more sensors included in the reception device 10004. According to embodiments, the feedback information may be secured by the renderer 10007 or a separate external element (or device, component, or the like). The dotted lines in FIG. 1 represent a process of transmitting the feedback information secured by the renderer 10007. The point cloud content providing system may process (encode/decode) point cloud data based on the feedback information. Accordingly, the point cloud video data decoder 10006 may perform a decoding operation based on the feedback information. The reception device 10004 may transmit the feedback information to the transmission device 10000. The transmission device 10000 (or the point cloud video data encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmission device, a transmitter, or the like, and the reception device 10004 may be called a decoder, a receiving device, a receiver, or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

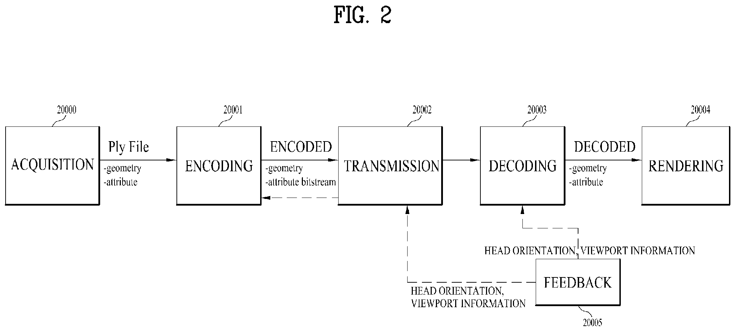

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (e.g., the point cloud transmission device 10000 or the point cloud video acquirer 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (e.g., values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, or the like, and the attribute may be called attributes, attribute information, attribute data, or the like. The point cloud content providing system (e.g., the point cloud transmission device 10000 or the point cloud video acquirer 10001) may secure point cloud data from information (e.g., depth information, color information, etc.) related to the acquisition process of the point cloud video.

The point cloud content providing system (e.g., the transmission device 10000 or the point cloud video encoder 10002) according to the embodiments may encode the point cloud data (20001). The point cloud content providing system may encode the point cloud data based on point cloud compression coding. As described above, the point cloud data may include the geometry and attributes of a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (e.g., the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (e.g., signaling information related to the geometry encoding and the attribute encoding). The point cloud content providing system may encapsulate a bitstream that carries the encoded point cloud data and transmit the same in the form of a file or segment.

The point cloud content providing system (e.g., the reception device 10004 or the receiver 10005) according to the embodiments may receive the bitstream containing the encoded point cloud data. In addition, the point cloud content providing system (e.g., the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (e.g., the reception device 10004 or the point cloud video decoder 10005) may decode the point cloud video data based on the signaling information related to encoding of the point cloud video data contained in the bitstream. The point cloud content providing system (e.g., the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (e.g., the reception device 10004 or the point cloud video decoder 10005) may reconstruct the point cloud video based on the positions according to the reconstructed geometry and the decoded attributes.

The point cloud content providing system according to the embodiments (e.g., the reception device 10004 or the renderer 10007) may render the decoded point cloud data (20004). The point cloud content providing system (e.g., the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.).

The point cloud content providing system (e.g., the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus detailed description thereof is omitted.

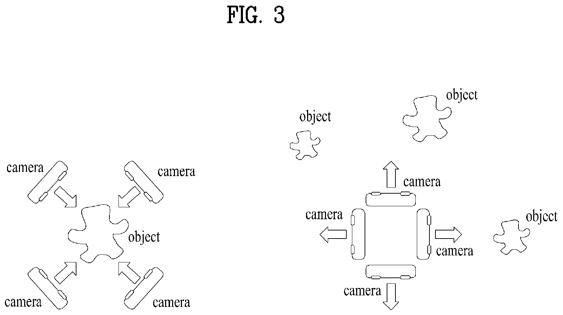

FIG. 3 illustrates an exemplary process of capturing a point cloud video according to embodiments.

FIG. 3 illustrates an exemplary point cloud video capture process of the point cloud content providing system described with reference to FIGS. 1 to 2.

Point cloud content includes a point cloud video (images and/or videos) representing an object and/or environment located in various 3D spaces (e.g., a 3D space representing a real environment, a 3D space representing a virtual environment, etc.). Accordingly, the point cloud content providing system according to the embodiments may capture a point cloud video using one or more cameras (e.g., an infrared camera capable of securing depth information, an RGB camera capable of extracting color information corresponding to the depth information, etc.), a projector (e.g., an infrared pattern projector to secure depth information), a LiDAR, or the like. The point cloud content providing system according to the embodiments may extract the shape of geometry composed of points in a 3D space from the depth information and extract the attributes of each point from the color information to secure point cloud data. An image and/or video according to the embodiments may be captured based on at least one of the inward-facing technique and the outward-facing technique.

The left part of FIG. 3 illustrates the inward-facing technique. The inward-facing technique refers to a technique of capturing images a central object with one or more cameras (or camera sensors) positioned around the central object. The inward-facing technique may be used to generate point cloud content providing a 360-degree image of a key object to the user (e.g., VR/AR content providing a 360-degree image of an object (e.g., a key object such as a character, player, object, or actor) to the user).

The right part of FIG. 3 illustrates the outward-facing technique. The outward-facing technique refers to a technique of capturing images an environment of a central object rather than the central object with one or more cameras (or camera sensors) positioned around the central object. The outward-facing technique may be used to generate point cloud content for providing a surrounding environment that appears from the user's point of view (e.g., content representing an external environment that may be provided to a user of a self-driving vehicle).

As shown in the figure, the point cloud content may be generated based on the capturing operation of one or more cameras. In this case, the coordinate system may differ among the cameras, and accordingly the point cloud content providing system may calibrate one or more cameras to set a global coordinate system before the capturing operation. In addition, the point cloud content providing system may generate point cloud content by synthesizing an arbitrary image and/or video with an image and/or video captured by the above-described capture technique. The point cloud content providing system may not perform the capturing operation described in FIG. 3 when it generates point cloud content representing a virtual space. The point cloud content providing system according to the embodiments may perform post-processing on the captured image and/or video. In other words, the point cloud content providing system may remove an unwanted area (e.g., a background), recognize a space to which the captured images and/or videos are connected, and, when there is a spatial hole, perform an operation of filling the spatial hole.

The point cloud content providing system may generate one piece of point cloud content by performing coordinate transformation on points of the point cloud video secured from each camera. The point cloud content providing system may perform coordinate transformation on the points based on the coordinates of the position of each camera. Accordingly, the point cloud content providing system may generate content representing one wide range, or may generate point cloud content having a high density of points.

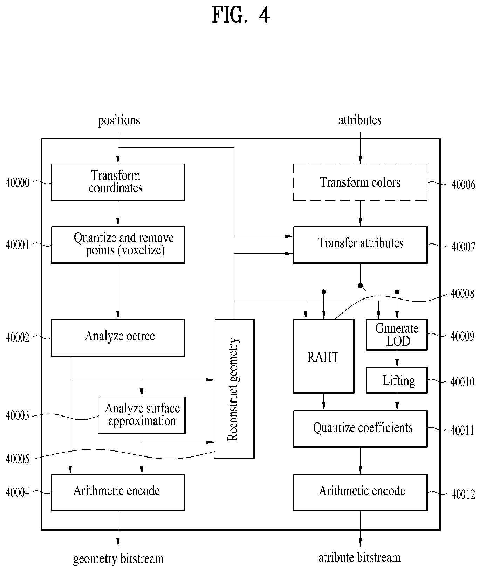

FIG. 4 illustrates an exemplary point cloud encoder according to embodiments.

FIG. 4 shows an example of the point cloud video encoder 10002 of FIG. 1. The point cloud encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 and 2, the point cloud encoder may perform geometry encoding and attribute encoding. The geometry encoding is performed before the attribute encoding.

The point cloud encoder according to the embodiments includes a coordinate transformer (Transform coordinates) 40000, a quantizer (Quantize and remove points (voxelize)) 40001, an octree analyzer (Analyze octree) 40002, and a surface approximation analyzer (Analyze surface approximation) 40003, an arithmetic encoder (Arithmetic encode) 40004, a geometry reconstructor (Reconstruct geometry) 40005, a color transformer (Transform colors) 40006, an attribute transformer (Transform attributes) 40007, a RAHT transformer (RAHT) 40008, an LOD generator (Generate LOD) 40009, a lifting transformer (Lifting) 40010, a coefficient quantizer (Quantize coefficients) 40011, and/or an arithmetic encoder (Arithmetic encode) 40012.

The coordinate transformer 40000, the quantizer 40001, the octree analyzer 40002, the surface approximation analyzer 40003, the arithmetic encoder 40004, and the geometry reconstructor 40005 may perform geometry encoding. The geometry encoding according to the embodiments may include octree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 40000 according to the embodiments receives positions and transforms the same into coordinates. For example, the positions may be transformed into position information in a three-dimensional space (e.g., a three-dimensional space represented by an XYZ coordinate system). The position information in the three-dimensional space according to the embodiments may be referred to as geometry information.

The quantizer 40001 according to the embodiments quantizes the geometry. For example, the quantizer 40001 may quantize the points based on a minimum position value of all points (e.g., a minimum value on each of the X, Y, and Z axes). The quantizer 40001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 40001 according to the embodiments performs voxelization based on the quantized positions to reconstruct quantized points. As in the case of a pixel, which is the minimum unit containing 2D image/video information, points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 40001 may match groups of points in the 3D space with voxels. According to embodiments, one voxel may include only one point. According to embodiments, one voxel may include one or more points. In order to express one voxel as one point, the position of the center of a voxel may be set based on the positions of one or more points included in the voxel. In this case, attributes of all positions included in one voxel may be combined and assigned to the voxel.

The octree analyzer 40002 according to the embodiments performs octree geometry coding (or octree coding) to present voxels in an octree structure. The octree structure represents points matched with voxels, based on the octal tree structure.

The surface approximation analyzer 40003 according to the embodiments may analyze and approximate the octree. The octree analysis and approximation according to the embodiments is a process of analyzing a region containing a plurality of points to efficiently provide octree and voxelization.

The arithmetic encoder 40004 according to the embodiments performs entropy encoding on the octree and/or the approximated octree. For example, the encoding scheme includes arithmetic encoding. As a result of the encoding, a geometry bitstream is generated.

The color transformer 40006, the attribute transformer 40007, the RAHT transformer 40008, the LOD generator 40009, the lifting transformer 40010, the coefficient quantizer 40011, and/or the arithmetic encoder 40012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 40006 according to the embodiments performs color transform coding of transforming color values (or textures) included in the attributes. For example, the color transformer 40006 may transform the format of color information (for example, from RGB to YCbCr). The operation of the color transformer 40006 according to embodiments may be optionally applied according to the color values included in the attributes.

The geometry reconstructor 40005 according to the embodiments reconstructs (decompresses) the octree and/or the approximated octree. The geometry reconstructor 40005 reconstructs the octree/voxels based on the result of analyzing the distribution of points. The reconstructed octree/voxels may be referred to as reconstructed geometry (restored geometry).

The attribute transformer 40007 according to the embodiments performs attribute transformation to transform the attributes based on the reconstructed geometry and/or the positions on which geometry encoding is not performed. As described above, since the attributes are dependent on the geometry, the attribute transformer 40007 may transform the attributes based on the reconstructed geometry information. For example, based on the position value of a point included in a voxel, the attribute transformer 40007 may transform the attribute of the point at the position. As described above, when the position of the center of a voxel is set based on the positions of one or more points included in the voxel, the attribute transformer 40007 transforms the attributes of the one or more points. When the trisoup geometry encoding is performed, the attribute transformer 40007 may transform the attributes based on the trisoup geometry encoding.

The attribute transformer 40007 may perform the attribute transformation by calculating the average of attributes or attribute values of neighboring points (e.g., color or reflectance of each point) within a specific position/radius from the position (or position value) of the center of each voxel. The attribute transformer 40007 may apply a weight according to the distance from the center to each point in calculating the average. Accordingly, each voxel has a position and a calculated attribute (or attribute value).

The attribute transformer 40007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) may be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 40007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 40009.

The RAHT transformer 40008 according to the embodiments performs RAHT coding for predicting attribute information based on the reconstructed geometry information. For example, the RAHT transformer 40008 may predict attribute information of a node at a higher level in the octree based on the attribute information associated with a node at a lower level in the octree.

The LOD generator 40009 according to the embodiments generates a level of detail (LOD) to perform prediction transform coding. The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 40010 according to the embodiments performs lifting transform coding of transforming the attributes a point cloud based on weights. As described above, lifting transform coding may be optionally applied.

The coefficient quantizer 40011 according to the embodiments quantizes the attribute-coded attributes based on coefficients.

The arithmetic encoder 40012 according to the embodiments encodes the quantized attributes based on arithmetic coding.

Although not shown in the figure, the elements of the point cloud encoder of FIG. 4 may be implemented by hardware including one or more processors or integrated circuits configured to communicate with one or more memories included in the point cloud providing apparatus, software, firmware, or a combination thereof. The one or more processors may perform at least one of the operations and/or functions of the elements of the point cloud encoder of FIG. 4 described above. Additionally, the one or more processors may operate or execute a set of software programs and/or instructions for performing the operations and/or functions of the elements of the point cloud encoder of FIG. 4. The one or more memories according to the embodiments may include a high speed random access memory, or include a non-volatile memory (e.g., one or more magnetic disk storage devices, flash memory devices, or other non-volatile solid-state memory devices).

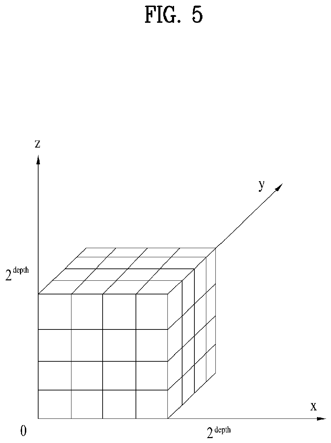

FIG. 5 shows an example of voxels according to embodiments.

FIG.5 shows voxels positioned in a 3D space represented by a coordinate system composed of three axes, which are the X-axis, the Y-axis, and the Z-axis. As described with reference to FIG. 4, the point cloud encoder (e.g., the quantizer 40001) may perform voxelization. Voxel refers to a 3D cubic space generated when a 3D space is divided into units (unit=1.0) based on the axes representing the 3D space (e.g., X-axis, Y-axis, and Z-axis). FIG. 5 shows an example of voxels generated through an octree structure in which a cubical axis-aligned bounding box defined by two poles (0, 0, 0) and (2d, 2d, 2d) is recursively subdivided. One voxel includes at least one point. The spatial coordinates of a voxel may be estimated from the positional relationship with a voxel group. As described above, a voxel has an attribute (such as color or reflectance) like pixels of a 2D image/video. The details of the voxel are the same as those described with reference to FIG. 4, and therefore a description thereof is omitted.

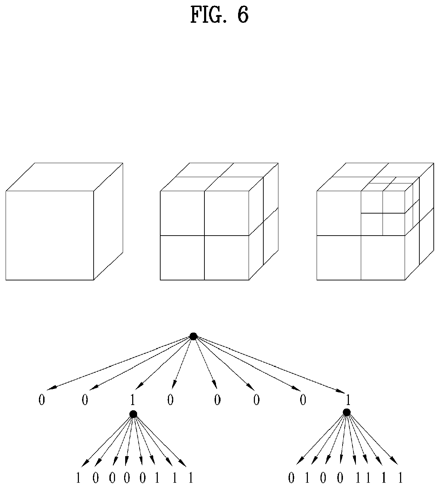

FIG. 6 shows an example of an octree and occupancy code according to embodiments.

As described with reference to FIGS. 1 to 4, the point cloud content providing system (point cloud video encoder 10002) or the point cloud encoder (e.g., the octree analyzer 40002) performs octree geometry coding (or octree coding) based on an octree structure to efficiently manage the region and/or position of the voxel.

The upper part of FIG. 6 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles (0, 0, 0) and (2d, 2d, 2d). Here, 2d may be set to a value constituting the smallest bounding box surrounding all points of the point cloud content (or point cloud video). Here, d denotes the depth of the octree. The value of d is determined in the following equation. In the following equation, (xintn, yintn, zintn) denotes the positions (or position values) of quantized points.

$$\mathrm{d} = Ceil\left(Log2\left(Max\left(x_n^{int}, y_n^{int}, z_n^{int}, n = 1, \dots, N\right) + 1\right)\right)$$

As shown in the middle of the upper part of FIG. 6, the entire 3D space may be divided into eight spaces according to partition. Each divided space is represented by a cube with six faces. As shown in the upper right of FIG. 6, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 6 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 6 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud encoder (e.g., the arithmetic encoder 40004) according to the embodiments may perform entropy encoding on the occupancy codes. In order to increase the compression efficiency, the point cloud encoder may perform intra/inter-coding on the occupancy codes. The reception device (e.g., the reception device 10004 or the point cloud video decoder 10006) according to the embodiments reconstructs the octree based on the occupancy codes.

The point cloud encoder (e.g., the point cloud encoder of FIG. 4 or the octree analyzer 40002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud encoder according to the embodiments may skip voxelization and perform direct coding to directly code the positions of points included in the specific region. The coordinates of a direct coding point according to the embodiments are referred to as direct coding mode (DCM). The point cloud encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud encoder (or the arithmetic encoder 40004) according to the embodiments may perform entropy coding on the positions (or position values) of the points.

The point cloud encoder (e.g., the surface approximation analyzer 40003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud encoder according to the embodiments may specify a level at which trisoup geometry encoding is to be applied. For example, when the specific level is equal to the depth of the octree, the point cloud encoder does not operate in the trisoup mode. In other words, the point cloud encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud encoder according to the embodiments may perform entropy encoding on the starting point (x, y, z) of the edge, the direction vector ($\Delta$x, $\Delta$y, $\Delta$z) of the edge, and the vertex position value (relative position value within the edge). When the trisoup geometry encoding is applied, the point cloud encoder according to the embodiments (e.g., the geometry reconstructor 40005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed by: i) calculating the centroid value of each vertex, ii) subtracting the center value from each vertex value, and iii) estimating the sum of the squares of the values obtained by the subtraction.

$$\text{i) } \begin{bmatrix} \mu_x \\ \mu_y \\ \mu_z \end{bmatrix} = \frac{1}{n} \sum_{i=1}^{n} \begin{bmatrix} x_i \\ y_i \\ z_i \end{bmatrix}; \text{ ii) } \begin{bmatrix} \bar{x}_i \\ \bar{y}_i \\ \bar{z}_i \end{bmatrix} = \begin{bmatrix} x_i \\ y_i \\ z_i \end{bmatrix} - \begin{bmatrix} \mu_x \\ \mu_y \\ \mu_z \end{bmatrix}; \text{ iii) } \begin{bmatrix} \sigma_x^2 \\ \sigma_y^2 \\ \sigma_z^2 \end{bmatrix} = \sum_{i=1}^{n} \begin{bmatrix} \bar{x}_i^2 \\ \bar{y}_i^2 \\ \bar{z}_i^2 \end{bmatrix}$$

The minimum value of the sum is estimated, and the projection process is performed according to the axis with the minimum value. For example, when the element x is the minimum, each vertex is projected on the x-axis with respect to the center of the block, and projected on the (y, z) plane. When the values obtained through projection on the (y, z) plane are (ai, bi), the value of $\theta$ is estimated through atan2(bi, ai), and the vertices are ordered based on the value of $\theta$. The table below shows a combination of vertices for creating a triangle according to the number of the vertices. The vertices are ordered from 1 to n. The table below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

Triangles formed from vertices ordered 1,...,n

n triangles

3 (1,2,3)
4 (1,2,3), (3,4,1)
5 (1,2,3), (3,4,5), (5,1,3)
6 (1,2,3), (3,4,5), (5,6,1), (1,3,5)
7 (1,2,3), (3,4,5), (5,6,7), (7,1,3), (3,5,7)
8 (1,2,3), (3,4,5), (5,6,7), (7,8,1), (1,3,5), (5,7,1)
9 (1,2,3), (3,4,5), (5,6,7), (7,8,9), (9,1,3), (3,5,7), (7,9,3)
10(1,2,3), (3,4,5), (5,6,7), (7,8,9), (9,10,1), (1,3,5), (5,7,9), (9,1,5)
11(1,2,3), (3,4,5), (5,6,7), (7,8,9), (9,10,11), (11,1,3), (3,5,7), (7,9,11), (11,3,7)
12(1,2,3), (3,4,5), (5,6,7), (7,8,9), (9,10,11), (11,12,1), (1,3,5), (5,7,9), (9,11,1), (1,5,9)

The upsampling process is performed to add points in the middle along the edge of the triangle and perform voxelization. The added points are generated based on the upsampling factor and the width of the block. The added points are called refined vertices. The point cloud encoder according to the embodiments may voxelize the refined vertices. In addition, the point cloud encoder may perform attribute encoding based on the voxelized positions (or position values).

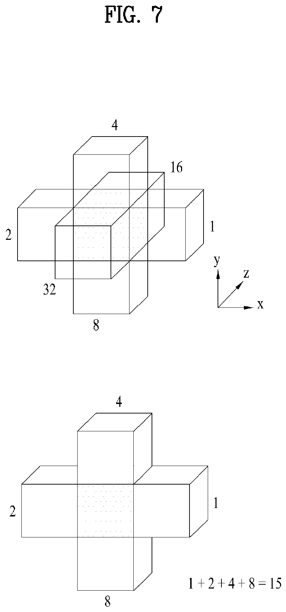

FIG. 7 shows an example of a neighbor node pattern according to embodiments.

In order to increase the compression efficiency of the point cloud video, the point cloud encoder according to the embodiments may perform entropy coding based on context adaptive arithmetic coding.

As described with reference to FIGS. 1 to 6, the point cloud content providing system or the point cloud encoder (e.g., the point cloud video encoder 10002, the point cloud encoder or arithmetic encoder 40004 of FIG. 4) may perform entropy coding on the occupancy code immediately. In addition, the point cloud content providing system or the point cloud encoder may perform entropy encoding (intra encoding) based on the occupancy code of the current node and the occupancy of neighboring nodes, or perform entropy encoding (inter encoding) based on the occupancy code of the previous frame. A frame according to embodiments represents a set of point cloud videos generated at the same time. The compression efficiency of intra encoding/inter encoding according to the embodiments may depend on the number of neighboring nodes that are referenced. When the bits increase, the operation becomes complicated, but the encoding may be biased to one side, which may increase the compression efficiency. For example, when a 3-bit context is given, coding needs to be performed using $2^3 = 8$ methods. The part divided for coding affects the complexity of implementation. Accordingly, it is necessary to meet an appropriate level of compression efficiency and complexity.

FIG. 7 illustrates a process of obtaining an occupancy pattern based on the occupancy of neighbor nodes. The point cloud encoder according to the embodiments determines occupancy of neighbor nodes of each node of the octree and obtains a value of a neighbor pattern. The neighbor node pattern is used to infer the occupancy pattern of the node. The upper part of FIG. 7 shows a cube corresponding to a node (a cube positioned in the middle) and six cubes (neighbor nodes) sharing at least one face with the cube. The nodes shown in the figure are nodes of the same depth. The numbers shown in the figure represent weights (1, 2, 4, 8, 16, and 32) associated with the six nodes, respectively. The weights are assigned sequentially according to the positions of neighboring nodes.

The lower part of FIG. 7 shows neighbor node pattern values. A neighbor node pattern value is the sum of values multiplied by the weight of an occupied neighbor node (a neighbor node having a point). Accordingly, the neighbor node pattern values are 0 to 63. When the neighbor node pattern value is 0, it indicates that there is no node having a point (no occupied node) among the neighbor nodes of the node. When the neighbor node pattern value is 63, it indicates that all neighbor nodes are occupied nodes. As shown in the figure, since neighbor nodes to which weights 1, 2, 4, and 8 are assigned are occupied nodes, the neighbor node pattern value is 15, the sum of 1, 2, 4, and 8. The point cloud encoder may perform coding according to the neighbor node pattern value (for example, when the neighbor node pattern value is 63, 64 kinds of coding may be performed). According to embodiments, the point cloud encoder may reduce coding complexity by changing a neighbor node pattern value (for example, based on a table by which 64 is changed to 10 or 6).

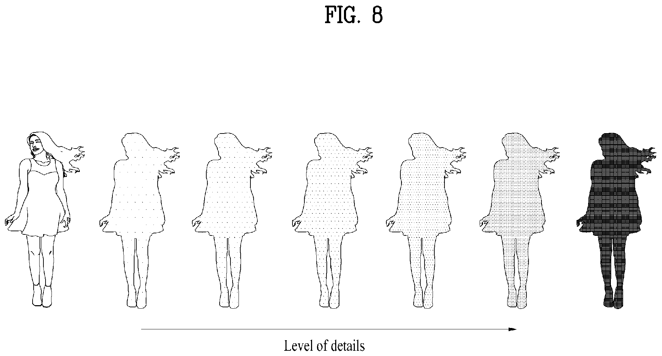

FIG. 8 illustrates an example of point configuration in each LOD according to embodiments.

As described with reference to FIGS. 1 to 7, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud encoder (e.g., the LOD generator 40009) may classify (reorganize) points by LOD. The figure shows the point cloud content corresponding to LODs. The leftmost picture in the figure represents original point cloud content. The second picture from the left of the figure represents distribution of the points in the lowest LOD, and the rightmost picture in the figure represents distribution of the points in the highest LOD. That is, the points in the lowest LOD are sparsely distributed, and the points in the highest LOD are densely distributed. That is, as the LOD rises in the direction pointed by the arrow indicated at the bottom of the figure, the space (or distance) between points is narrowed.

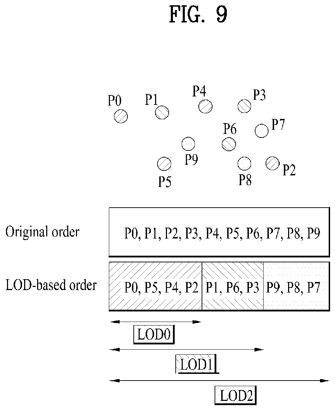

FIG. 9 illustrates an example of point configuration for each LOD according to embodiments.

As described with reference to FIGS. 1 to 8, the point cloud content providing system, or the point cloud encoder (e.g., the point cloud video encoder 10002, the point cloud encoder of FIG. 4, or the LOD generator 40009) may generates an LOD. The LOD is generated by reorganizing the points into a set of refinement levels according to a set LOD distance value (or a set of Euclidean distances). The LOD generation process is performed not only by the point cloud encoder, but also by the point cloud decoder.

The upper part of FIG. 9 shows examples (P0 to P9) of points of the point cloud content distributed in a 3D space. In FIG. 9, the original order represents the order of points P0 to P9 before LOD generation. In FIG. 9, the LOD based order represents the order of points according to the LOD generation. Points are reorganized by LOD. Also, a high LOD contains the points belonging to lower LODs. As shown in FIG. 9, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 4, the point cloud encoder according to the embodiments may perform prediction transform coding, lifting transform coding, and RAHT transform coding selectively or in combination.

The point cloud encoder according to the embodiments may generate a predictor for points to perform prediction transform coding for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud encoder according to the embodiments (e.g., the coefficient quantizer 40011) may quantize and inversely quantize the residuals (which may be called residual attributes, residual attribute values, or attribute prediction residuals) obtained by subtracting a predicted attribute (attribute value) from the attribute (attribute value) of each point. The quantization process is configured as shown in the following table.

TABLE 1 Attribute prediction residuals quantization pseudo code

```
int PCCQuantization(int value, int quantStep) {
if( value >=0) {
return floor(value / quantStep + 1.0 / 3.0);
} else {
return -floor(-value / quantStep + 1.0 / 3.0);
}
}
```

TABLE 2 Attribute prediction residuals inverse quantization pseudo code

```
int PCCInverseQuantization(int value, int quantStep) {
if( quantStep ==0) {
return value;
} else {
return value * quantStep;
}
}
```

When the predictor of each point has neighbor points, the point cloud encoder (e.g., the arithmetic encoder 40012) according to the embodiments may perform entropy coding on the quantized and inversely quantized residual values as described above. When the predictor of each point has no neighbor point, the point cloud encoder according to the embodiments (e.g., the arithmetic encoder 40012) may perform entropy coding on the attributes of the corresponding point without performing the above-described operation.

The point cloud encoder according to the embodiments (e.g., the lifting transformer 40010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.

1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.

2) Lift prediction process: Subtract the value obtained by multiplying the attribute value of the point by the weight from the existing attribute value to calculate a predicted attribute value.

3) Create temporary arrays called updateweight and update and initialize the temporary arrays to zero.

4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.

5) Lift update process: Divide the attribute values of the update array for all predictors by the weight value of the updateweight array of the predictor index, and add the existing attribute value to the values obtained by the division.

6) Calculate predicted attributes by multiplying the attribute values updated through the lift update process by the weight updated through the lift prediction process (stored in the QW) for all predictors. The point cloud encoder (e.g., coefficient quantizer 40011) according to the embodiments quantizes the predicted attribute values. In addition, the point cloud encoder (e.g., the arithmetic encoder 40012) performs entropy coding on the quantized attribute values.

The point cloud encoder (e.g., the RAHT transformer 40008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

The equation below represents a RAHT transformation matrix. In the equation, $g_{lx,y,z}$ denotes the average attribute value of voxels at level $l$. $g_{lx,y,z}$ may be calculated based on $g_{l+12x,y,z}$ and $g_{l+12x+1,y,z}$. The weights for $g_{l2x,y,z}$ and $g_{l2x+1,y,z}$ are $w1 = w_{l2x,y,z}$ and $w2 = w_{l2x+1,y,z}$.

$$\begin{bmatrix} g_{l-1\,x,y,z} \\ h_{l-1\,x,y,z} \end{bmatrix} = T_{w1\,w2} \begin{bmatrix} g_{l\,2x,y,z} \\ g_{l\,2x+1,y,z} \end{bmatrix}, \quad T_{w1\,w2} = \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l-1x,y,z}$ is a low-pass value and is used in the merging process at the next higher level. $h_{l-1x,y,z}$ denotes high-pass coefficients. The high-pass coefficients at each step are quantized and subjected to entropy coding (e.g., encoding by the arithmetic encoder 400012). The weights are calculated as $w_{l-1x,y,z} = w_{l2x,y,z} + w_{l2x+1,y,z}$. The root node is created through the $g_{10,0,0}$ and $g_{10,0,1}$ as follows.

$$\begin{bmatrix} gDC \\ h_{0_{0,0,0}} \end{bmatrix} = T_{w1000\,w1001} \begin{bmatrix} g_{1_{0,0,0z}} \\ g_{1_{0,0,1}} \end{bmatrix}$$

The value of gDC is also quantized and subjected to entropy coding like the high-pass coefficients.

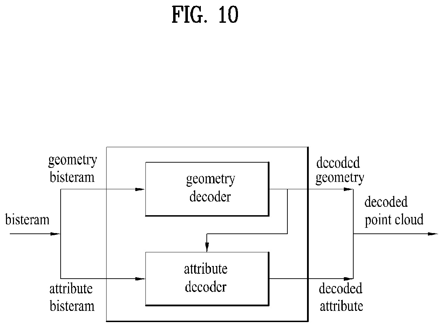

FIG. 10 illustrates a point cloud decoder according to embodiments.

The point cloud decoder illustrated in FIG. 10 is an example of the point cloud video decoder 10006 described in FIG. 1, and may perform the same or similar operations as the operations of the point cloud video decoder 10006 illustrated in FIG. 1. As shown in the figure, the point cloud decoder may receive a geometry bitstream and an attribute bitstream contained in one or more bitstreams. The point cloud decoder includes a geometry decoder and an attribute decoder. The geometry decoder performs geometry decoding on the geometry bitstream and outputs decoded geometry.

The attribute decoder performs attribute decoding based on the decoded geometry and the attribute bitstream, and outputs decoded attributes. The decoded geometry and decoded attributes are used to reconstruct point cloud content (a decoded point cloud).

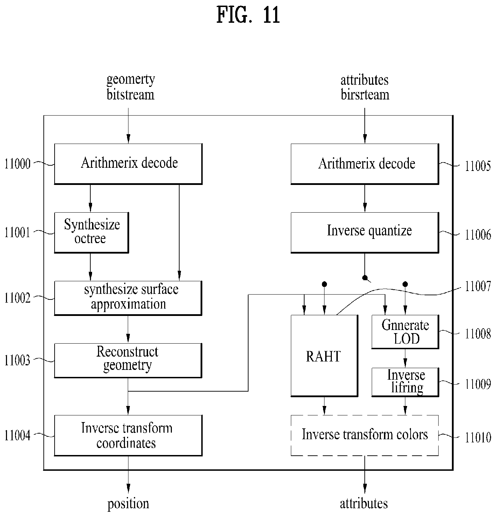

FIG. 11 illustrates a point cloud decoder according to embodiments.

The point cloud decoder illustrated in FIG. 11 is an example of the point cloud decoder illustrated in FIG. 10, and may perform a decoding operation, which is a reverse process to the encoding operation of the point cloud encoder illustrated in FIGS. 1 to 9.

As described with reference to FIGS. 1 and 10, the point cloud decoder may perform geometry decoding and attribute decoding. The geometry decoding is performed before the attribute decoding.

The point cloud decoder according to the embodiments includes an arithmetic decoder (Arithmetic decode) 11000, an octree synthesizer (Synthesize octree) 11001, a surface approximation synthesizer (Synthesize surface approximation) 11002, and a geometry reconstructor (Reconstruct geometry) 11003, a coordinate inverse transformer (Inverse transform coordinates) 11004, an arithmetic decoder (Arithmetic decode) 11005, an inverse quantizer (Inverse quantize) 11006, a RAHT transformer 11007, an LOD generator (Generate LOD) 11008, an inverse lifter (inverse lifting) 11009, and/or a color inverse transformer (Inverse transform colors) 11010.

The arithmetic decoder 11000, the octree synthesizer 11001, the surface approximation synthesizer 11002, and the geometry reconstructor 11003, and the coordinate inverse transformer 11004 may perform geometry decoding. The geometry decoding according to the embodiments may include direct coding and trisoup geometry decoding. The direct coding and trisoup geometry decoding are selectively applied. The geometry decoding is not limited to the above-described example, and is performed as a reverse process to the geometry encoding described with reference to FIGS. 1 to 9.

The arithmetic decoder 11000 according to the embodiments decodes the received geometry bitstream based on the arithmetic coding. The operation of the arithmetic decoder 11000 corresponds to the inverse process of the arithmetic encoder 40004.

The octree synthesizer 11001 according to the embodiments may generate an octree by acquiring an occupancy code from the decoded geometry bitstream (or information on the geometry secured as a result of decoding). The occupancy code is configured as described in detail with reference to FIGS. 1 to 9.

When the trisoup geometry encoding is applied, the surface approximation synthesizer 11002 according to the embodiments may synthesize a surface based on the decoded geometry and/or the generated octree.

The geometry reconstructor 11003 according to the embodiments may regenerate geometry based on the surface and/or the decoded geometry. As described with reference to FIGS. 1 to 9, direct coding and trisoup geometry encoding are selectively applied. Accordingly, the geometry reconstructor 11003 directly imports and adds position information about the points to which direct coding is applied. When the trisoup geometry encoding is applied, the geometry reconstructor 11003 may reconstruct the geometry by performing the reconstruction operations of the geometry reconstructor 40005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 11004 according to the embodiments may acquire positions of the points by transforming the coordinates based on the reconstructed geometry.

The arithmetic decoder 11005, the inverse quantizer 11006, the RAHT transformer 11007, the LOD generator 11008, the inverse lifter 11009, and/or the color inverse transformer 11010 may perform the attribute decoding described with reference to FIG. 10. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 11005 according to the embodiments decodes the attribute bitstream by arithmetic coding.

The inverse quantizer 11006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud encoder.

According to embodiments, the RAHT transformer 11007, the LOD generator 11008, and/or the inverse lifter 11009 may process the reconstructed geometry and the inversely quantized attributes. As described above, the RAHT transformer 11007, the LOD generator 11008, and/or the inverse lifter 11009 may selectively perform a decoding operation corresponding to the encoding of the point cloud encoder.

The color inverse transformer 11010 according to the embodiments performs inverse transform coding to inversely transform a color value (or texture) included in the decoded attributes. The operation of the color inverse transformer 11010 may be selectively performed based on the operation of the color transformer 40006 of the point cloud encoder.

Although not shown in the figure, the elements of the point cloud decoder of FIG. 11 may be implemented by hardware including one or more processors or integrated circuits configured to communicate with one or more memories included in the point cloud providing device, software, firmware, or a combination thereof. The one or more processors may perform at least one or more of the operations and/or functions of the elements of the point cloud decoder of FIG. 11 described above. Additionally, the one or more processors may operate or execute a set of software programs and/or instructions for performing the operations and/or functions of the elements of the point cloud decoder of FIG. 11.

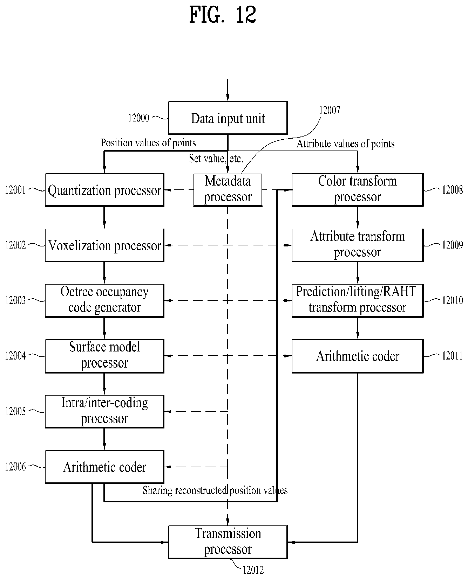

FIG. 12 illustrates a transmission device according to embodiments.

The transmission device shown in FIG. 12 is an example of the transmission device 10000 of FIG. 1 (or the point cloud encoder of FIG. 4). The transmission device illustrated in FIG. 12 may perform one or more of the operations and methods the same as or similar to those of the point cloud encoder described with reference to FIGS. 1 to 9. The transmission device according to the embodiments may include a data input unit 12000, a quantization processor 12001, a voxelization processor 12002, an octree occupancy code generator 12003, a surface model processor 12004, an intra/inter-coding processor 12005, an arithmetic coder 12006, a metadata processor 12007, a color transform processor 12008, an attribute transform processor 12009, a prediction/lifting/RAHT transform processor 12010, an arithmetic coder 12011 and/or a transmission processor 12012.

The data input unit 12000 according to the embodiments receives or acquires point cloud data. The data input unit 12000 may perform an operation and/or acquisition method the same as or similar to the operation and/or acquisition method of the point cloud video acquirer 10001 (or the acquisition process 20000 described with reference to FIG. 2).

The data input unit 12000, the quantization processor 12001, the voxelization processor 12002, the octree occupancy code generator 12003, the surface model processor 12004, the intra/inter-coding processor 12005, and the arithmetic coder 12006 perform geometry encoding. The geometry encoding according to the embodiments is the same as or similar to the geometry encoding described with reference to FIGS. 1 to 9, and thus a detailed description thereof is omitted.

The quantization processor 12001 according to the embodiments quantizes geometry (e.g., position values of points). The operation and/or quantization of the quantization processor 12001 is the same as or similar to the operation and/or quantization of the quantizer 40001 described with reference to FIG. 4. Details are the same as those described with reference to FIGS. 1 to 9.

The voxelization processor 12002 according to the embodiments voxelizes the quantized position values of the points. The voxelization processor 12002 may perform an operation and/or process the same or similar to the operation and/or the voxelization process of the quantizer 40001 described with reference to FIG. 4. Details are the same as those described with reference to FIGS. 1 to 9.

The octree occupancy code generator 12003 according to the embodiments performs octree coding on the voxelized positions of the points based on an octree structure. The octree occupancy code generator 12003 may generate an occupancy code. The octree occupancy code generator 12003 may perform an operation and/or method the same as or similar to the operation and/or method of the point cloud encoder (or the octree analyzer 40002) described with reference to FIGS. 4 and 6. Details are the same as those described with reference to FIGS. 1 to 9.

The surface model processor 12004 according to the embodiments may perform trisoup geometry encoding based on a surface model to reconstruct the positions of points in a specific region (or node) on a voxel basis. The surface model processor 12004 may perform an operation and/or method the same as or similar to the operation and/or method of the point cloud encoder (e.g., the surface approximation analyzer 40003) described with reference to FIG. 4. Details are the same as those described with reference to FIGS. 1 to 9.

The intra/inter-coding processor 12005 according to the embodiments may perform intra/inter-coding on point cloud data. The intra/inter-coding processor 12005 may perform coding the same as or similar to the intra/inter-coding described with reference to FIG. 7. Details are the same as those described with reference to FIG. 7. According to embodiments, the intra/inter-coding processor 12005 may be included in the arithmetic coder 12006.

The arithmetic coder 12006 according to the embodiments performs entropy encoding on an octree of the point cloud data and/or an approximated octree. For example, the encoding scheme includes arithmetic encoding. The arithmetic coder 12006 performs an operation and/or method the same as or similar to the operation and/or method of the arithmetic encoder 40004.

The metadata processor 12007 according to the embodiments processes metadata about the point cloud data, for example, a set value, and provides the same to a necessary processing process such as geometry encoding and/or attribute encoding. Also, the metadata processor 12007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 12008, the attribute transform processor 12009, the prediction/lifting/RAHT transform processor 12010, and the arithmetic coder 12011 perform the attribute encoding. The attribute encoding according to the embodiments is the same as or similar to the attribute encoding described with reference to FIGS. 1 to 9, and thus a detailed description thereof is omitted.

The color transform processor 12008 according to the embodiments performs color transform coding to transform color values included in attributes. The color transform processor 12008 may perform color transform coding based on the reconstructed geometry. The reconstructed geometry is the same as described with reference to FIGS. 1 to 9. Also, it performs an operation and/or method the same as or similar to the operation and/or method of the color transformer 40006 described with reference to FIG. 4 is performed. A detailed description thereof is omitted.

The attribute transform processor 12009 according to the embodiments performs attribute transformation to transform the attributes based on the reconstructed geometry and/or the positions on which geometry encoding is not performed. The attribute transform processor 12009 performs an operation and/or method the same as or similar to the operation and/or method of the attribute transformer 40007 described with reference to FIG. 4. A detailed description thereof is omitted. The prediction/lifting/RAHT transform processor 12010 according to the embodiments may code the transformed attributes by any one or a combination of RAHT coding, prediction transform coding, and lifting transform coding. The prediction/lifting/RAHT transform processor 12010 performs at least one of the operations the same as or similar to the operations of the RAHT transformer 40008, the LOD generator 40009, and the lifting transformer 40010 described with reference to FIG. 4. In addition, the prediction transform coding, the lifting transform coding, and the RAHT transform coding are the same as those described with reference to FIGS. 1 to 9, and thus a detailed description thereof is omitted.

The arithmetic coder 12011 according to the embodiments may encode the coded attributes based on the arithmetic coding. The arithmetic coder 12011 performs an operation and/or method the same as or similar to the operation and/or method of the arithmetic encoder 400012.

The transmission processor 12012 according to the embodiments may transmit each bitstream containing encoded geometry and/or encoded attributes and metadata information, or transmit one bitstream configured with the encoded geometry and/or the encoded attributes and the metadata information. When the encoded geometry and/or the encoded attributes and the metadata information according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS) for signaling of a tile level, and slice data. The slice data may include information about one or more slices. One slice according to embodiments may include one geometry bitstream Geom00 and one or more attribute bitstreams Attr00 and Attr10.

A slice refers to a series of syntax elements representing the entirety or part of a coded point cloud frame.

The TPS according to the embodiments may include information about each tile (e.g., coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom_tile_id) and a slice identifier (geom_slice_id) included in the GPS, and information about the data contained in the payload. As described above, the metadata processor 12007 according to the embodiments may generate and/or process the signaling information and transmit the same to the transmission processor 12012. According to embodiments, the elements to perform geometry encoding and the elements to perform attribute encoding may share data/information with each other as indicated by dotted lines. The transmission processor 12012 according to the embodiments may perform an operation and/or transmission method the same as or similar to the operation and/or transmission method of the transmitter 10003. Details are the same as those described with reference to FIGS. 1 and 2, and thus a description thereof is omitted.

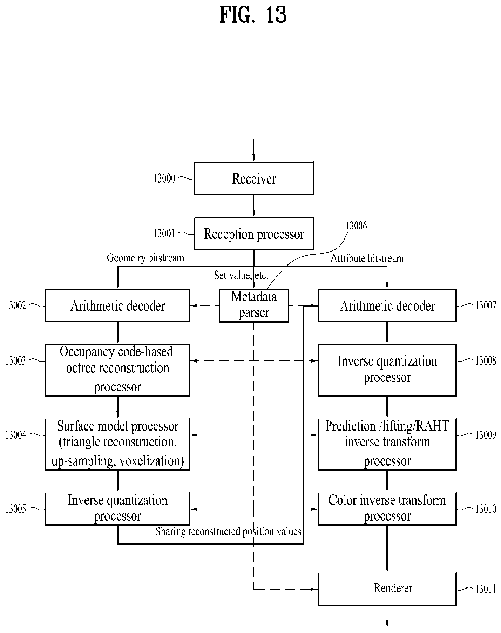

FIG. 13 illustrates a reception device according to embodiments.

The reception device illustrated in FIG. 13 is an example of the reception device 10004 of FIG. 1 (or the point cloud decoder of FIGS. 10 and 11). The reception device illustrated in FIG. 13 may perform one or more of the operations and methods the same as or similar to those of the point cloud decoder described with reference to FIGS. 1 to 11.

The reception device according to the embodiment may include a receiver 13000, a reception processor 13001, an arithmetic decoder 13002, an occupancy code-based octree reconstruction processor 13003, a surface model processor (triangle reconstruction, up-sampling, voxelization) 13004, an inverse quantization processor 13005, a metadata parser 13006, an arithmetic decoder 13007, an inverse quantization processor 13008, a prediction /lifting/RAHT inverse transform processor 13009, a color inverse transform processor 13010, and/or a renderer 13011. Each element for decoding according to the embodiments may perform a reverse process to the operation of a corresponding element for encoding according to the embodiments.

The receiver 13000 according to the embodiments receives point cloud data. The receiver 13000 may perform an operation and/or reception method the same as or similar to the operation and/or reception method of the receiver 10005 of FIG. 1. A detailed description thereof is omitted.

The reception processor 13001 according to the embodiments may acquire a geometry bitstream and/or an attribute bitstream from the received data. The reception processor 13001 may be included in the receiver 13000.

The arithmetic decoder 13002, the occupancy code-based octree reconstruction processor 13003, the surface model processor 13004, and the inverse quantization processor 13005 may perform geometry decoding. The geometry decoding according to embodiments is the same as or similar to the geometry decoding described with reference to FIGS. 1 to 10, and thus a detailed description thereof is omitted.

The arithmetic decoder 13002 according to the embodiments may decode the geometry bitstream based on arithmetic coding. The arithmetic decoder 13002 performs an operation and/or coding the same as or similar to the operation and/or coding of the arithmetic decoder 11000.

The occupancy code-based octree reconstruction processor 13003 according to the embodiments may reconstruct an octree by acquiring an occupancy code from the decoded geometry bitstream (or information about the geometry secured as a result of decoding). The occupancy code-based octree reconstruction processor 13003 performs an operation and/or method the same as or similar to the operation and/or octree generation method of the octree synthesizer 11001. When the trisoup geometry encoding is applied, the surface model processor 13004 according to the embodiments may perform trisoup geometry decoding and related geometry reconstruction (e.g., triangle reconstruction, up-sampling, voxelization) based on the surface model method. The surface model processor 13004 performs an operation the same as or similar to that of the surface approximation synthesizer 11002 and/or the geometry reconstructor 11003.

The inverse quantization processor 13005 according to the embodiments may inversely quantize the decoded geometry.

The metadata parser 13006 according to the embodiments may parse metadata contained in the received point cloud data, for example, a set value. The metadata parser 13006 may pass the metadata to geometry decoding and/or attribute decoding. The metadata is the same as that described with reference to FIG. 12, and thus a detailed description thereof is omitted.

The arithmetic decoder 13007, the inverse quantization processor 13008, the prediction/lifting/RAHT inverse transform processor 13009 and the color inverse transform processor 13010 perform attribute decoding. The attribute decoding is the same as or similar to the attribute decoding described with reference to FIGS. 1 to 10, and thus a detailed description thereof is omitted.

The arithmetic decoder 13007 according to the embodiments may decode the attribute bitstream by arithmetic coding. The arithmetic decoder 13007 may decode the attribute bitstream based on the reconstructed geometry. The arithmetic decoder 13007 performs an operation and/or coding the same as or similar to the operation and/or coding of the arithmetic decoder 11005.

The inverse quantization processor 13008 according to the embodiments may inversely quantize the decoded attribute bitstream. The inverse quantization processor 13008 performs an operation and/or method the same as or similar to the operation and/or inverse quantization method of the inverse quantizer 11006.

The prediction/lifting/RAHT inverse transform processor 13009 according to the embodiments may process the reconstructed geometry and the inversely quantized attributes. The prediction/lifting/RAHT inverse transform processor 13009 performs one or more of operations and/or decoding the same as or similar to the operations and/or decoding of the RAHT transformer 11007, the LOD generator 11008, and/or the inverse lifter 11009. The color inverse transform processor 13010 according to the embodiments performs inverse transform coding to inversely transform color values (or textures) included in the decoded attributes. The color inverse transform processor 13010 performs an operation and/or inverse transform coding the same as or similar to the operation and/or inverse transform coding of the color inverse transformer 11010. The renderer 13011 according to the embodiments may render the point cloud data.

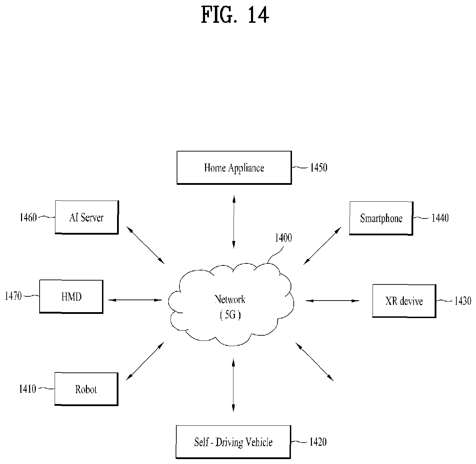

FIG. 14 illustrates an exemplary structure operable in connection with point cloud data transmission/reception methods/devices according to embodiments.

The structure of FIG. 14 represents a configuration in which at least one of a server 1460, a robot 1410, a self-driving vehicle 1420, an XR device 1430, a smartphone 1440, a home appliance 1450, and/or a head-mount display (HMD) 1470 is connected to the cloud network 1400. The robot 1410, the self-driving vehicle 1420, the XR device 1430, the smartphone 1440, or the home appliance 1450 is called a device. Further, the XR device 1430 may correspond to a point cloud data (PCC) device according to embodiments or may be operatively connected to the PCC device.

The cloud network 1400 may represent a network that constitutes part of the cloud computing infrastructure or is present in the cloud computing infrastructure. Here, the cloud network 1400 may be configured using a 3G network, 4G or Long Term Evolution (LTE) network, or a 5G network.

The server 1460 may be connected to at least one of the robot 1410, the self-driving vehicle 1420, the XR device 1430, the smartphone 1440, the home appliance 1450, and/or the HMD 1470 over the cloud network 1400 and may assist in at least a part of the processing of the connected devices 1410 to 1470.

The HMD 1470 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 1410 to 1450 to which the above-described technology is applied will be described. The devices 1410 to 1450 illustrated in FIG. 14 may be operatively connected/coupled to a point cloud data transmission/reception device according to the above-described embodiments.

<PCC+XR>

The XR/PCC device 1430 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 1430 may analyze 3D point cloud data or image data acquired through various sensors or from an external device and generate position data and attribute data about 3D points. Thereby, the XR/PCC device 1430 may acquire information about the surrounding space or a real object, and render and output an XR object. For example, the XR/PCC device 1430 may match an XR object including auxiliary information about a recognized object with the recognized object and output the matched XR object.

<PCC+XR+Mobile phone>

The XR/PCC device 1430 may be implemented as a mobile phone 1440 by applying PCC technology.

The mobile phone 1440 may decode and display point cloud content based on the PCC technology.

<PCC+Self-driving+XR>

The self-driving vehicle 1420 may be implemented as a mobile robot, a vehicle, an unmanned aerial vehicle, or the like by applying the PCC technology and the XR technology.

The self-driving vehicle 1420 to which the XR/PCC technology is applied may represent a self-driving vehicle provided with means for providing an XR image, or a self-driving vehicle that is a target of control/interaction in the XR image. In particular, the self-driving vehicle 1420 which is a target of control/interaction in the XR image may be distinguished from the XR device 1430 and may be operatively connected thereto.

The self-driving vehicle 1420 having means for providing an XR/PCC image may acquire sensor information from sensors including a camera, and output the generated XR/PCC image based on the acquired sensor information. For example, the self-driving vehicle 1420 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 1220 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

As described with reference to FIGS. 1 to 14, point cloud data is composed of a set of points, each of which may have geometry information and attribute information. The geometry information is the three-dimensional position of each point (e.g., the coordinate values of the x, y, and z axes). That is, the position of each point is indicated by parameters in a coordinate system representing a three-dimensional space (e.g., the parameters (x, y, z) of the three axes representing the space, the x, y, and z axes). The attribute information may include color (RGB, YUV, etc.), reflectance, normals, and transparency. The attribute information may be represented in the form of a scalar or vector. The geometry information may be referred to as geometry, geometry data, or a geometry bitstream. Also, the attribute information may be referred to as attributes, attribute data, or an attribute bitstream.

According to embodiments, point cloud data may be categorized into category 1 for static point cloud data, category 2 for dynamic point cloud data, and category 3 for point cloud data acquired through dynamic movement, depending on the type and acquisitioin method of of point cloud data. Category 1 is composed of a point cloud of a single frame with a high density of points for an object or space. Category 3 data may be divided into as frame-based data with multiple frames acquired while moving, and fused data, which is a single frame matching a point cloud acquired for a large space by a LiDAR sensor with a color image acquired as a 2D image.

According to embodiments, inter-prediction (coding/decoding) may be used to efficiently compress three-dimensional point cloud data with multiple frames over time, such as frame-based point cloud data with multiple frames. Inter-prediction coding/decoding may be applied to geometry information and/or attribute information. Inter-prediction is prediction between images or frames, while intra-prediction is prediction in an image.

Hereinafter, a motion estimation method related to inter-prediction techniques will be described.

In the inter-prediction, all or part of the current frame is predicted from the coded frame based on information that is highly similar to information about the current frame. In this case, the unit forming the basis of determination of the similarity may be referred to as a prediction unit (PU). The inter-prediction is a prediction method that utilizes motion between multiple frames acquired over time, and the technique therefor is called motion vector estimation or motion estimation.

Motion estimation may be divided into global motion estimation, which rotates, translates, enlarges, and/or shirinks the entire frame, and local motion estimation, which predicts the motion of a portion of the frame.

Motion estimation may be performed by splitting the space of the current frame into PUs, extracting the points contained in a region, extracting the points contained in a corresponding region of a reference frame, and calculating the distance and/or vector difference between the extracted points of the current frame and the extracted points of the reference frame combined. In this case, a vector difference less than a certain value is set as a target vector difference.

Then, for a set of unit vectors comprising multiple unit vectors with different orientations, the closest (similar) vector to the target vector difference may be searched for by multiplying each unit vector by an arbitrary value of amount (unit vector x amount).

The similar vector search process may be repeated several times as the amount is gradually decreased from an initial value to a preset minimum value. The vector finally found through the iteration of the search process may be set as the best vector, and the cost may be calculated using the method of rate distortion optimization (RDO).

The PU may be divided into multiple sub-PUs, and the best vector search process described above may be performed in the divided sub-PUs. If the sum of the RDO costs of the divided sub-PUs is less than the RDO cost value of the PU, the PU is finally divided into sub-Pus. Otherwise, the best vector of the PU is signaled.

The point cloud data transmission/reception device according to embodiments may perform motion vector prediction considering the PU and the data distribution in the corresponding search window in order to apply an inter-frame prediction technique as a method for increasing the compression efficiency of point cloud data having one or more frames. The PU according to the embodiments may be referred to by various terms, such as a unit, a first unit, a region, a first region, a box, a zone, or a unit.

The point cloud data transmission/reception device according to the embodiments may compress/reconstruct data composed of a point cloud. Specifically, for effective compression of a point cloud having one or more frames, motion estimation and data prediction may be performed considering the characteristics of the point cloud captured by the LiDAR sensor and the distribution of data contained in the PU.

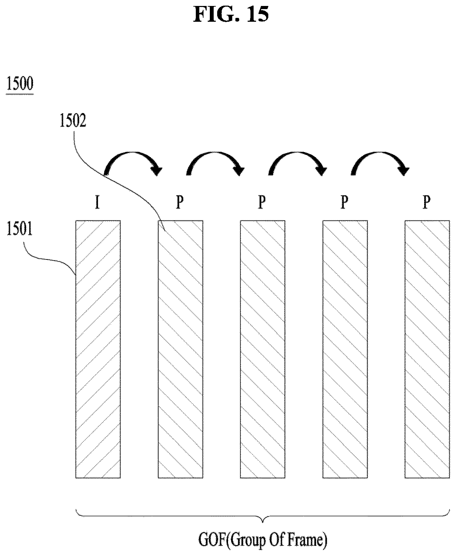

FIG. 15 illustrates an example of frames according to embodiments.

Referring to FIG. 15, the GOF 1500 includes a plurality of frames. For motion estimation, the frames in the GOF 1500 may have an IPPP structure and may include intra-prediction frames that are predicted by determining similarities within a single frame and frames that are predicted by a relationship between frames. The number of frames constituting the GoF 1500 may vary depending on the number of GoFs When the prediction ends according to the period of the GoF 1500, the prediction may be performed again from the I-frame 1501 without reference to the previous frame.

The GoF 1500 may represent a group of frames, which may be referred to as a GoP. The frames constituting the GoF 1500 include an intra frame (I frame) 1501, a predicted frame (P frame) 1502, and/or a bidirectional prediction frame (B frame) (not shown). The I frame 1501 may represent a frame that does not reference any other frame. The I-frame 1501 is the first frame in the GoF 1500, and accordingly it has no foregoing frame and does not reference any other frames. The P-frame 1502 represents a frame that is predicted by referencing a previous I-frame 1502 or another P-frame 1502. The B-frame represents a frame predicted by referencing the I-frame 1501 or P-frame 1502 in both directions.

The inter-frame prediction is based on a motion prediction technique. The motion prediction technique according to the embodiments may be broadly divided into global motion estimation and local motion estimation.

The global motion estimation compensates for motion of an entire frame, while he local motion estimation predicts motion at a specific position in the frame.

For the global motion estimation, the point cloud data transmission/reception device according to the embodiments may sort the points contained within nodes on a node-by-node basis starting from a certain node size in an octree structure, and searches for an optimal global motion matrix by calculating the least mean square between the points sampled in the sorted current frame and the previous frame (predictor). Then, it may apply the global motion matrix to the entire predictor to acquire the result of the predicted current frame.

Local motion estimation searches for the optimum motion vector ( with the minimum RDO by comparing the RDO values between the points contained in each region of the search window that contains a particular node (or PU) in the current frame and a corresponding node at the same position in the previous frame or predictor and is at least as large as the threshold. When it is advantageous to split the node to find the respective local motions for the sub-nodes, the node (or PU) may be split, the motion vector for each node (or PU) is signaled, and is applied to the predictor. In this case, the previous frame according to the embodiments may be referred to as a reference frame referenced by the current frame.

The point cloud data transmission/reception device according to the embodiments may apply the motion vector to objects and roads separately. Configuring PUs in an octree structure does not reflect the characteristics of automotive LiDAR captured images, where the content is captured by a spinning laser or the like such as LiDAR. Therefore, the predicted target points may contain outliers during global motion prediction or local motion estimation.

The point cloud data transmission/reception device according to the embodiments may perform local/global motion estimation using a spherical coordinate system when inter-predicting data captured by a LiDAR sensor, or LiDAR data captured at uniform positions in all directions from a specific point.

The point cloud data transmission/reception device according to the embodiments may define the entire region in a cylindrical shape to take into account the capture characteristics of the point cloud data. Further, a PU may be configured and motion vector estimation may be performed. Furthermore, motion vector estimation may be performed, considering only key points and excluding outliers in a configured region. Further, the coordinates being processed may be transformed to reflect data capture characteristics.

The terms used in the present disclosure are to be understood in accordance with their intended meaning, to the extent that they are widely used in the art. While subsampling of attribute information is described herein as an example, embodiments may also be applied to subsampling of position information, subsampling of points, or subsampling performed to asymmetrically construct the information constituting a point cloud.

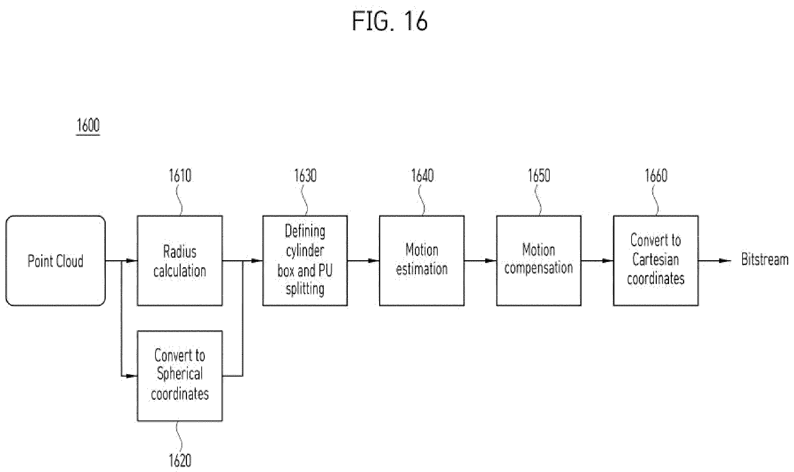

FIG. 16 illustrates an example of a device/method for transmitting/receiving point cloud data according to embodiments.

FIG. 16 may be understood as a flowchart illustrating a process of processing point cloud data and a point cloud data transmission/reception device/method in terms of the components that perform the respective steps of the processing process.

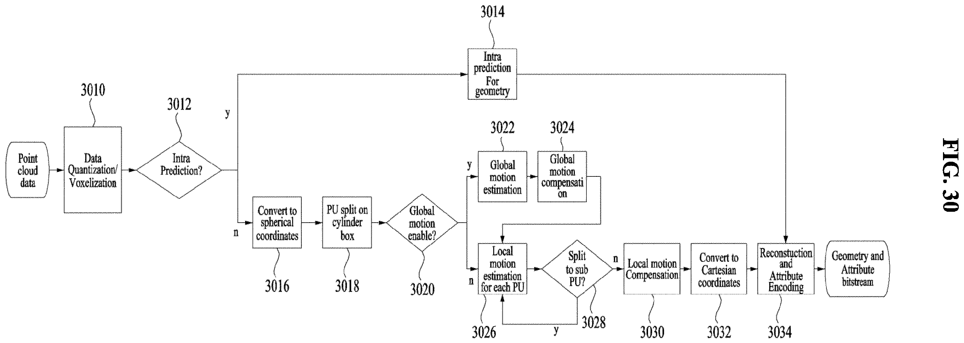

The point cloud data transmission device/method of FIG. 16 may be a device corresponding to, or a method performed by, the transmission device 10000 of FIG. 1, the transmission method of FIG. 2, the encoder of FIG. 4, the transmission device of FIG. 12, the devices of FIG. 14, and the transmission method/device of FIG. 30. The transmission device/method of FIG. 16 may be connected or combined with the devices/methods of FIGS. 1, 2, 4, 12, 14 and/or FIGS. 30 and 32 to encode point cloud data.

Each of the steps or components illustrated in FIG. 16 may represent an operation, or may represent a component by software, hardware, or a combination thereof that performs the operation. The components performing the operations illustrated in FIG. 16 may be referred to as modules, units, processors, or the like.

Referring to FIG. 16, the point cloud data transmission device according to the embodiments may perform motion estimation by splitting a region in a cylindrical shape in addition to a PU having a shape of a cube or cuboid to reflect the capture characteristics of the point cloud data.

The point cloud data transmission device (hereinafter "transmission device") according to the embodiments may calculate the radius of a cylinder box of a region containing the point cloud data (1601). Further, the transmission device may convert the coordinates of the point cloud data to spherical coordinates (1620). Further, the transmission device may define (or generate) a cylinder box of the region containing the point cloud data and split the generated cylinder box into PUs (1630). Further, the transmission device may perform motion estimation (1640) and motion compensation (1650) based on the PUs and convert the converted coordinates back to Cartesian coordinates (1660). Then, it may transmit a bitstream containing the point cloud data.

The transmission device according to the embodiments may convert coordinates to various kinds of coordinates suitable for the data capture characteristics, such as spherical coordinates as well as cylindrical coordinates.

Each of the aforementioned processing steps illustrated in FIG. 16 may be performed by components such as units, modules, chips, or processors capable of performing the steps, and each of the components performing the respective processing steps may be included in the transmission device according to the embodiments.

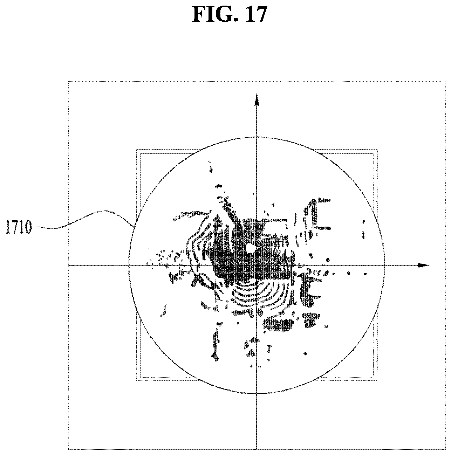

FIG. 17 illustrates an example of a cylinder box of point cloud data according to embodiments.

FIG. 17 illustrates a top view of a cylinder box 1710 of point cloud data, where the distance from the center of the point cloud data to the farthest point is referred to as the radius of the cylinder box.

As shown in FIG. 17, the transmission/reception device/method according to the embodiments may define (or generate) a cylinder box whose radius is the distance from the center axis of the point cloud data to the farthest point.

In other embodiments, the cylinder box represents a circular column-shaped or cylindrical region, and may be referred to as a circular column region (or box, zone, etc.), a cylindrical region, or other terms having a similar meaning.

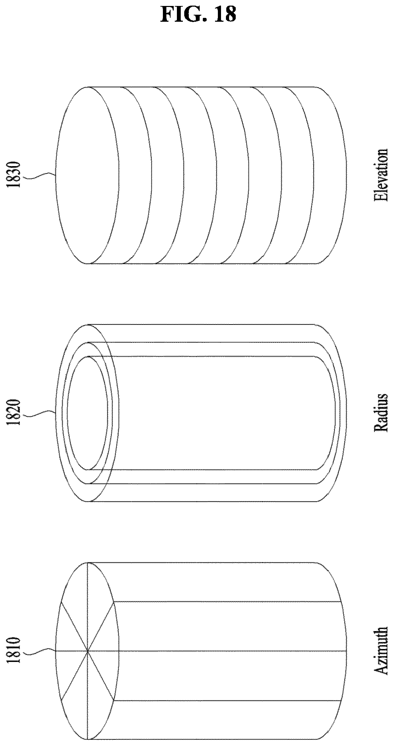

FIG. 18 illustrates examples of a split cylinder box according to embodiments.

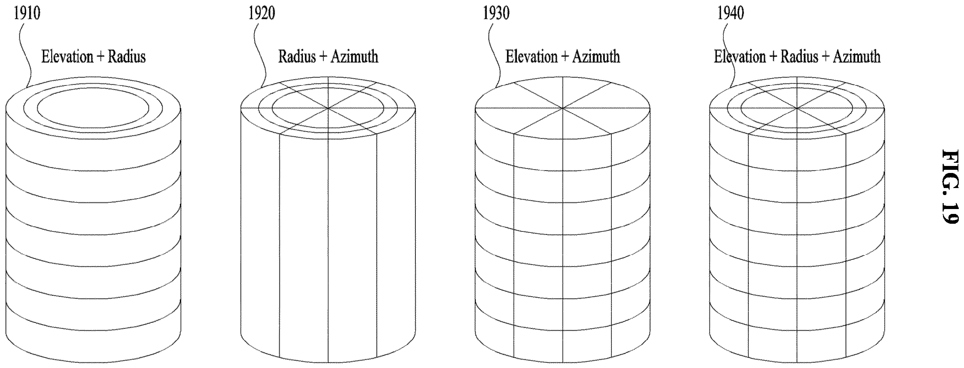

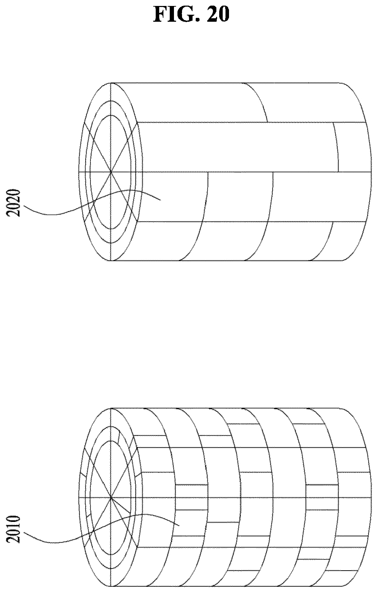

The cylinder box illustrated in FIG. 18 may correspond to the cylinder box of FIG. 16, the cylinder box 1710 of FIG. 17, and the cylinder box of FIGS. 19 and 20.

Referring to FIG. 18, the cylinder box according to the embodiments may be split. The cylinder box may be split based on at least one of azimuth, radius, or elevation.

The point cloud data transmission/reception device/method according to the embodiments may split the cylinder box into PUs. For example, in step 1630 of FIG. 16, a cylinder box may be generated, and the generated cylinder box may be split into PUs.

In FIG. 18, 1810 represents regions into which the cylinder box is split based on the azimuth, 1820 represents regions into which the cylinder box is split based on the radius, and 1830 represents regions into which the cylinder box is split based on the elevation.

FIG. 19 illustrates examples of a split cylinder box according to embodiments.

FIG. 19 illustrates examples of a cylinder box split based on a combination of azimuth, radius, and/or elevation.

The transmission/reception device/method according to the embodiments may apply a combination of at least two of the three criteria to split the cylinder box as needed.

1910 represents regions into which the cylinder box is split based on the elevation and radius, and 1920 represents regions into which the cylinder box is split based on the radius and azimuth. 1930 represents regions into which the cylinder box is split based on the elevation and azimuth, and 1940 represents regions into which the cylinder box is split based on the elevation, radius, and azimuth. According to embodiments, the split regions may correspond to PUs.

Once the largest prediction unit (LPU) which is split according to a determined split type among the seven split types illustrated in FIGS. 18 and 19 is determined, the transmission device and reception device according to the embodiments may convert the point cloud data to spherical coordinates (radius, azimuth, elevation) and perform global motion estimation and/or local motion estimation. If additional splitting is needed in local motion estimation, it may be performed to perform local motion estimation. When additional splitting is performed, the type of axes (radius, azimuth, elevation) to be split and the split size may be determined.

FIG. 20 illustrates examples of a cylinder box subjected to further splitting according to embodiments.

In FIG. 20, 2010 represents regions split by azimuth, radius, and elevation and additionally split by azimuth. 2020 represents regions split by radius and azimuth and additionally split by elevation.

When objects are separated from a captured image (or data) for motion estimation, the split PUs may be aggregated on an object-by-object basis and then motion estimation may be performed. Alternatively, motion estimation may be performed on the split PUs and then PUs having similar motions may be aggregated and defined as an object. Alternatively, an object may be input by separating the object in a previous step and a region containing a part or the entirety of an object in the cylinder box may be defined as a PU.

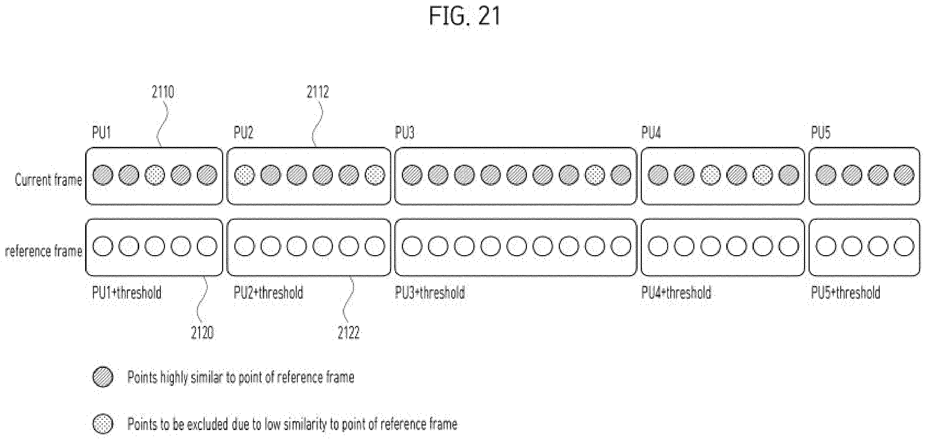

FIG. 21 illustrates an example of point sampling in motion estimation according to embodiments.

The point sampling of FIG. 21 may be performed by the transmission device 10000 of FIG. 1, the transmission method of FIG. 2, the encoder of FIG. 4, the transmission device of FIG. 12, the devices of FIG. 14, the transmission method/device of FIG. 16, and the transmission method/device of FIG. 30, and the point sampling of FIG. 21 may be performed by a combination of the devices/methods of FIGS. 1, 2, 4, 12, 14, 16, and/or 30, and FIG. 32.

Point sampling according to embodiments may exclude points contained in PUs of the current frame that are less similar to the points in a reference frame during motion estimation. The current frame may represent a frame in which encoding/decoding is being performed, and the reference frame may represent another frame in which encoding/decoding has already been performed.

Global Motion Estimation

Global motion estimation rotates, scales, and translates the entire point cloud data of one or more reference frames to recreate the points most similar to the point cloud data of the current frame.

The transmission/reception device according to embodiments may perform global motion estimation by sorting points on a per LPU or PU basis and uniformly sampling points contained in the entire point cloud. However, in this case, the number of contained points may vary among the positions of the PUs, and points that are not related to the point cloud data contained in the reference frame may be sampled.

Therefore, the transmission/reception device according to the embodiments may include points in the pool of points used for the global motion vector in consideration of their relationship to points in the reference frame, and proportionally perform sampling on the point cloud data contained in the pool. For example, when the total number of points in the point cloud is 1000, 800 points are highly relevant to the reference frame, and 100 points are to be sampled in total, the transmission/reception device according to the embodiments may sample points whose positions in the order of the 1000 points differ by 10. In addition, the transmission/reception device according to the embodiments may sample 100 points that are evenly spaced apart from each other in sequence among 800 points that are highly relevant to the reference frame.

The transmission/reception device/method according to the embodiments may categorize PUs that contain points in the current frame, sort the points according to the order of the PUs, and extract target points for sampling the entire point cloud.

Referring to FIG. 21, the transmission/reception device/method according to the embodiments may separate non-empty blocks that are included in a region having a size equal to the size of the PU plus a specific threshold in a reference frame, sort the points in order of PU blocks, and then compare the points with the points contained in the same PU index or position in the current frame to exclude points from target points if they are greater than a predetermined threshold.

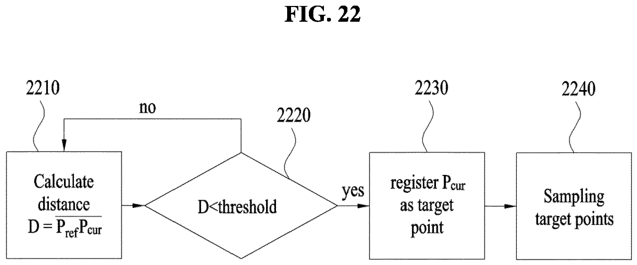

In FIG. 21, 2110 represents a first prediction unit (PU1) in the current frame, and 2112 represents a second prediction unit (PU2) in the current frame. 2120 represents a first block in the reference frame (PU1+threshold), and 2122 represents a second block in the reference frame (PU2+threshold). The first block in the reference frame may represent a region of a size equal to PU1 of the current frame plus a specific threshold IN a region corresponding to PU1. In other words, a block in the reference frame may correspond to a PU in the current frame. According to embodiments, the block may be referred to by other terms with similar meanings, such as area, unit, zone, or box, and may correspond to the search window or search region described in FIGS. 22 to 25.

By comparing similarity based on distance between points belonging to a PU in the current frame and points belonging to a block (or search region) in the reference frame, the transmission/reception device/method according to the embodiments may exclude points with low similarity in motion estimation.

FIG. 22 illustrates an example of point sampling in motion estimation according to embodiments.

The point sampling in FIG. 22 may be performed by the transmission device 10000 of FIG. 1, the transmission method of FIG. 2, the encoder of FIG. 4, the transmission device of FIG. 12, the devices of FIG. 14, the transmission method/device of FIG. 16, and the transmission method/device of FIG. 30, and the point sampling in FIG. 21 may be performed by a combination of the devices/methods of FIGS. 1, 2, 4, 12, 14, 16, and/or 30, and FIG. 32.

Point sampling according to embodiments refers to excluding points that are less similar to the points in the reference frame among the points contained in the PU in the current frame in motion estimation. The transmission/reception device according to the embodiments may determine whether to select a target point based on a point in a point cloud of the reference frame and a point in a point cloud of the current frame. When D, the distance between the two points, is greater than a specific threshold, the transmission/reception device may move to the next point at the position of the corresponding PU or block in the reference frame and compare the point with the point in the current frame. The target point according to the embodiments may represent a point relevant to the reference frame for motion estimation.

Referring to FIG. 22, the transmission/reception device/method according to the embodiments may calculate the distance D between a point in the current frame and a point in the reference frame (2210), compare the calculated distance D with a specific threshold (2220), register the point in the current frame as a target point when the distance is within the threshold (2230), and perform sampling (2240) on the registered target points. When the calculated distance D is greater than a specific threshold, the point in the current frame may be compared with the next point in the reference frame.

The shape and size of the block according to the embodiments may be determined based on the cylinder box according to embodiments, or may be determined based on a bounding box in an octree structure.

The transmission/reception device/method according to the embodiments may perform global motion estimation to extract points similar to the target points from the entire reference frame by uniformly sampling the target points consisting of only highly relevant points, and mapping an extracted portion of the point cloud in the reference frame to the sampled target points.

Local Motion Estimation

When local motion estimation is performed in the angular mode, it may be necessary to have PUs and a search window adapted to spherical coordinates rather than the regions of a search window and PUs defined in the octree structure.

The transmission/reception device according to the embodiments may transmit and receive information using SPS/GPS/APS or the like to define a PU suitable for spherical coordinates, and may utilize a specific single axis, a combination of specific axes, or a combination of all three axes among radius, azimuth, and elevation in the cylinder box to determine a split axis and define any one of the split regions as a PU.

Furthermore, the transmission/reception device according to the embodiments may receive the same split axis information as the axis of the split region in the global motion estimation and split the initial PU, and may then perform further splitting on the same axis based on the signaling information or selectively perform splitting on the remaining split axes other than the initial split information.

To define a search window that includes a PU region, the transmission/reception device according to the embodiments may apply a method of defining as a search window a region that increases with the distance from the origin (or center), contains the PU like an octree structure, and is as larger as a specific threshold. However, in this case, other methods may be used to define the search window when in angular mode because other points may be subject to local motion estimation.

According to the embodiments, the current frame may represent a frame in which encoding or decoding is being performed, and the reference frame may represent another frame in which encoding or decoding has already been performed.

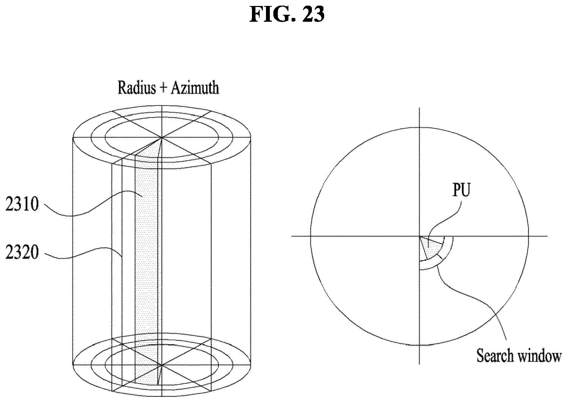

FIG. 23 illustrates an example of a search window used in motion estimation according to embodiments.

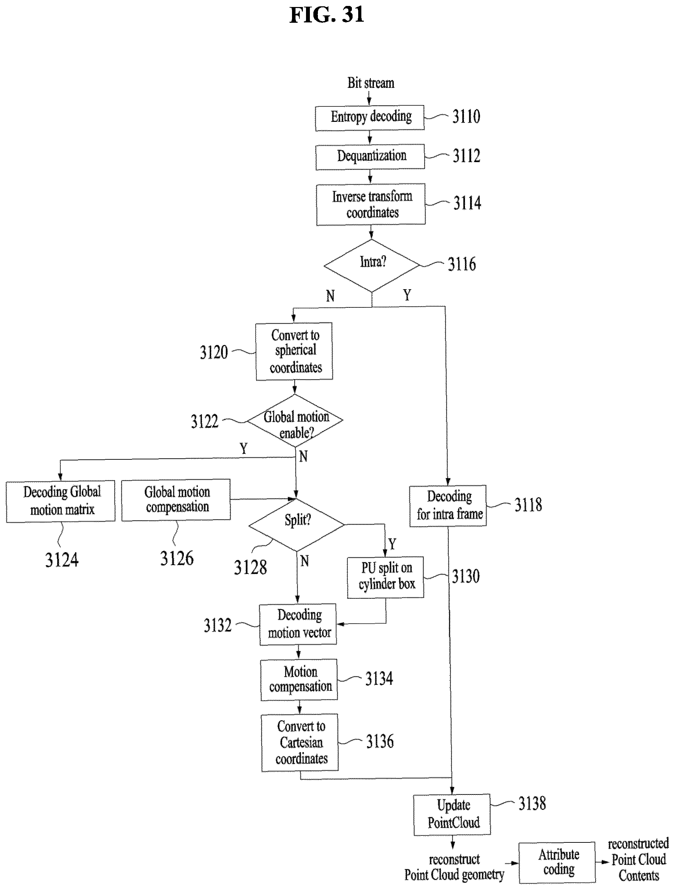

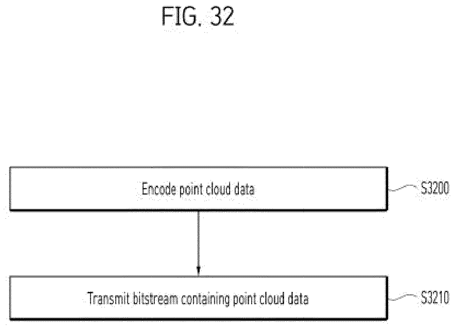

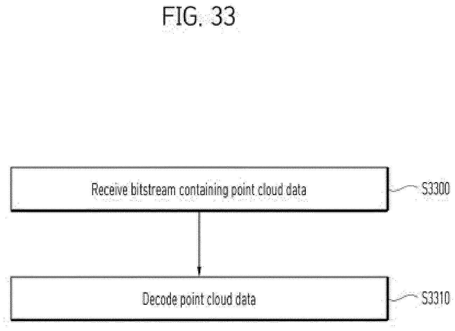

In performing motion estimation according to embodiments, the transmission device 10000 of FIG. 1, the transmission method of FIG. 2, the encoder of FIG. 4, the transmission device of FIG. 12, the devices of FIG. 14, the transmission method/device of FIG. 16 and/or the transmission method/device of FIGS. 30 and 32, and the reception device 20000 of FIG. 1, the reception method of FIG. 2, the decoder of FIG. 11, the reception device of FIG. 13, the device/method of FIG. 14, and/or the reception method/device of FIGS. 31 and 33 may configure a search window based on the PU.

Referring to FIG. 23, a cylinder box is split based on radius and azimuth. Also, based on a PU 2310 in a specific region, a region that contains the PU 2310 and is larger than the PU 2310 may be defined as a search window 2320.

The transmission/reception device/method according to the embodiments may add or subtract a threshold to or from the PUs to define the region of the search window in the octree.

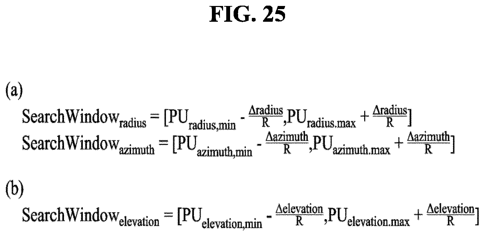

When the transmission/reception device/method according to the embodiments applies the same threshold in a cylinder box, the increase rate in region may be greater or less depending on the type of split axis (azimuth, radius, elevation). Thus, the transmission/reception device/method according to the embodiments may apply the equation in FIG. 25 to define a search window whose region increases at the same rate on all axes.

Referring to FIG. 23, the increase rate in the region of the search window differs between a case where a threshold is added to the PU based on azimuth and a case where a threshold is added to the PU based on radius. Therefore, FIG. 25 provides equations for defining a search window whose region increases at the same rate along any axis.

The transmission/reception device according to the embodiments may generate a search region with the same increase rate in volume along each axis (azimuth, radius, elevation) for a PU generated based on a cylinder box. For example, when the volume ratio of the region expanded in the azimuth direction to the region of the PU is 0.5 relative to the PU, the volume ratio of the region expanded in the radius direction to the region of the PU and the region expanded in the elevation direction to the region of the PU may be equally 0.5 relative to the PU. In other words, the search region (or, search window) may be generated at the same volume ratio of the expanded region to the PU in every axial direction.

The transmission/reception device according to the embodiments may configure a search region which is expanded at the same volumetric rate in all axial directions (azimuth, radius, and elevation) in a region of a reference frame corresponding to the PU of the current frame (i.e., the region that has the same position and geometry as the PU).

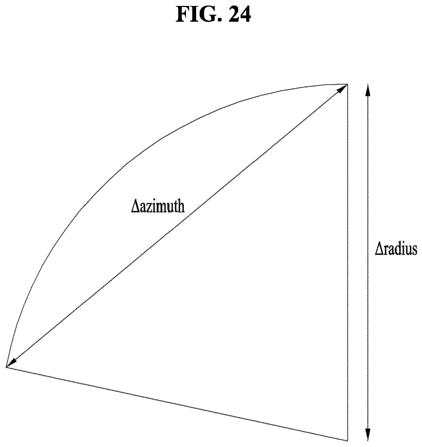

FIG. 24 illustrates an example of an azimuth and radius according to embodiments.

In the case where the splitting continues along the azimuth and radius directions, the transmission/reception device according to the embodiments may calculate the minimum and maximum values of each axis (radius, azimuth), or transmit and receive the values used to split the PU. By calculating the range of the PU as $\Delta$radius and $\Delta$azimuth, which are the differences between the minimum and maximum on each axis, and dividing $\Delta$radius and $\Delta$azimuth by a

rate, R, transmitted or received in the SPS, GPS, geometry data unit, or the like according to embodiments, a value to be added or subtracted to define the search window may be calculated.

FIG. 25-(a) shows an example of equations representing the range of a search window according to embodiments.

As shown in FIG. 25-(a), the range of the search window (SearchWindow) may be determined by calculating the search window radius (SearchWindow_radius) and the search window azimuth (SearchWindow_azimuth).

The SearchWindow_radius may be set to be in a range from the radius minimum of the PU (PU_radius, min) minus $\Delta$radius/R to the radius maximum of the PU (PU_radius, max) plus $\Delta$radius/R. Here, $\Delta$radius may denote the radius of the PU, or may be a predetermined value. R may be set to any value.

The SearchWindow_azimuth may be set to be in a range from the azimuth minimum of the PU (PU_azimuth, min) minus $\Delta$azimuth/R to the azimuth maximum of the PU (PU_azimuth, max) plus $\Delta$azimuth/R. Here, $\Delta$azimuth may denote the azimuth of the PU, or may be a predetermined value. R may be set to any value.

The size of the search window (or search region) according to embodiments may be set based on the sizes of the azimuth and radius of the PU.

FIG. 25-(b) shows an example of an equation representing the range of a search window according to embodiments.

The equation in FIG. 25-(b) represents the elevation range of the search window (or search region) (SearchWindow_elevation) when the splitting is performed along the elevation axis. In other words, it represents the size of elevation of the search window.

SearchWindow_elevation may be set to range from the minimum elevation of the PU (PU_elevation, min) minus $\Delta$elevation/R to the maximum elevation of the PU (PU_elevation, max) plus $\Delta$elevation/R. Here, $\Delta$elevation may denote the elevation size of the PU, or may be a predetermined value. Also, R may be set to any value.

The size of the search window (or search region) according to the embodiments may be set based on the size of the azimuth, radius, or elevation of the PU. Furthermore, the transmission/reception device/method according to the embodiments may generate a search region expanded at the same volume increase rate on each axis with respect to the PU, based on the value of R.

According to embodiments, the rate, R, may be set differently for each axis and may be calculated considering the data distribution.

After the regions of the search window and the PU are determined, the transmission/reception device/method according to the embodiments may find the points of the reference frame and the points of the current frame contained in each region, calculate a target vector difference, and determine a difference less than or equal to a specific value as a target for the local motion estimation.

The best vector may be found by iteratively performing unit vector of target vector difference x motion amount. Alternatively, by calculating the unit vector of the vector difference and gradually varying the amount, the vector with the smallest RDO value may be determined as the motion vector.

When the best vector is (0,0,0) and does not change, it may be determined whether to split the PU if the PU contains any point. The PU may be further split into sub-PUs, and local motion estimation may be iteratively performed.

The search window according to the embodiments may be referred to as a search region, search box, or other terms having similar meaning.

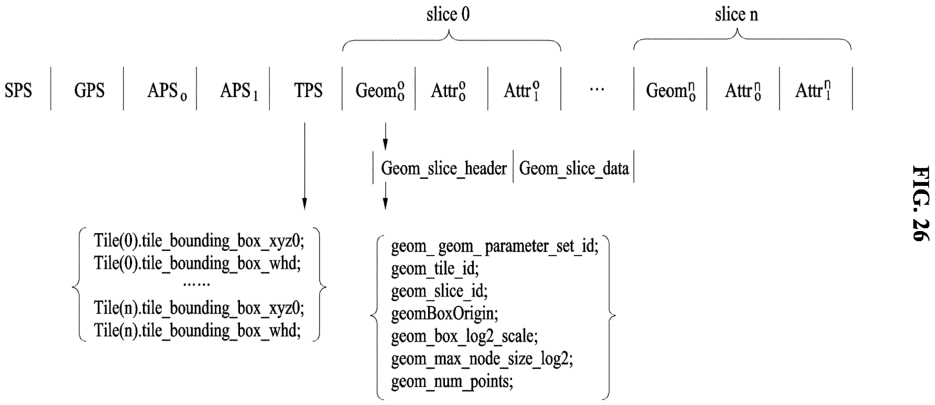

FIG. 26 illustrates an example of an encoded bitstream according to embodiments.

A bitstream according to embodiments may be transmitted based on the transmission device 10000 of FIG. 1, the transmission method of FIG. 2, the encoder of FIG. 4, the transmission device of FIG. 12, the devices of FIG. 14, the transmission method/device of FIG. 16, and the transmission method/device of FIGS. 30 and 32. Further, the bitstream according to embodiments may be received based on the reception device 20000 of FIG. 1, the reception method of FIG. 2, the decoder of FIG. 11, the reception device of FIG. 13, the devices of FIG. 14, and/or the reception method/device of FIGS. 31 and 33.

The bitstream according to embodiments may contain information related to motion vector estimation/compensation based on a cylinder box, reflecting the capture characteristics of the point cloud data.

A sequence parameter set (SPS) according to embodiments may indicate that motion vector estimation is to be performed based on the cylinder box. To this end, the SPS may carry some or all of the necessary information. The information may be carried in a geometry parameter set, a slice header, an SEI message, a data unit header, or the like. Depending on the application or system, corresponding or separate positions may be defined to provide different coverage, application methods, and the like. Furthermore, when a defined syntax element is applicable not only to the current point cloud data stream but also to multiple point cloud data streams, the information may be carried in a higher-level parameter set or the like.

The transmission/reception device according to embodiments may signal relevant information to perform motion estimation. Parameters (which may be referred to by various terms such as metadata and signaling information) according to embodiments may be generated in a process of the transmission device according to embodiments described below and may be delivered to the reception device according to the embodiments for use in a process of reconstructing point cloud data. For example, parameters may be generated by the metadata processor (or metadata generator) 12007 of FIG. 12 and acquired by the metadata parser 13006 of FIG. 13.

FIG. 26 illustrates a signed point cloud configuration.

The abbreviations shown in FIG. 26 represent the following

SPS: Sequence Parameter Set
GPS: Geometry Parameter Set
APS: Attribute Parameter Set
TPS: Tile Parameter Set
Geom: Geometry bitstream = geometry slice header+ geometry slice data
Attr: Attribute bitstream = attribute slice header + attribute slice data

A slice according to embodiments may be referred to as a data unit. The slice header may be referred to as a data unit header. In addition, slices may be referred to by other terms with similar meanings such as bricks, boxes, and regions.

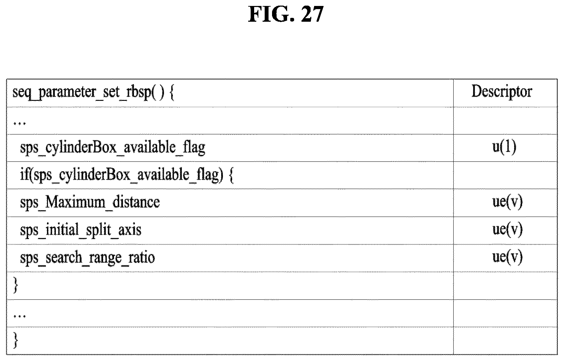

FIG. 27 shows an exemplary syntax of a sequence parameter set according to embodiments.

In the angular mode, motion estimation/compensation related information may be added to the SPS of the bitstream of FIG. 26 and signaled.

sps_cylinderBox_available_flag: This flag indicates whether motion vector estimation/compensation is performed based on a cylinder box. If set to true, the flag indicates that motion vector estimation/compensation is performed in a spherical coordinate system based on a cylinder box. The flag set to false indicates that motion vector estimation/compensation is performed in an octree structure.

ps_Maximum_distance: Indicates the radius of the cylinder box when sps_cylinderBox_available_flag is true. It may be set a value determined in the system, or may be found based on a Euclidean distance based on the larger absolute value of (pointCloud_min, pointCloud_max), which represents the size of the bounding box.

sps_initial_split_axis: Indicates the information about an axis that is used as the basis for splitting the cylinder box into PUs. The axis information may be signaled as one of the following values. When sps initial_split axis is 0, 1, or 2, it signal splitting based on a single axis such as radius, azimuth, or elevation; 3, 4, and 5 indicate splitting based on a combination of two axes, radius + azimuth, radius+elevation, or azimuth+elevation; and 6 indicates splitting based on three axes.

sps_initial_split_axis Description
0000 Radius
0001 Azimuth
0010 Elevation
0011 Radius + Azimuth
0100 Radius + Elevation
0101 Azimuth + Elevation
0110 Radius + Elevation + Azimuth
0111 - 1111 reserved
sps_search_range_ratio: Set to a value to define the range of the search window, which may be defined according to the size ratio of the PU. The value may be between 0 and 1. It may be the value of R described with reference to FIG. 25.

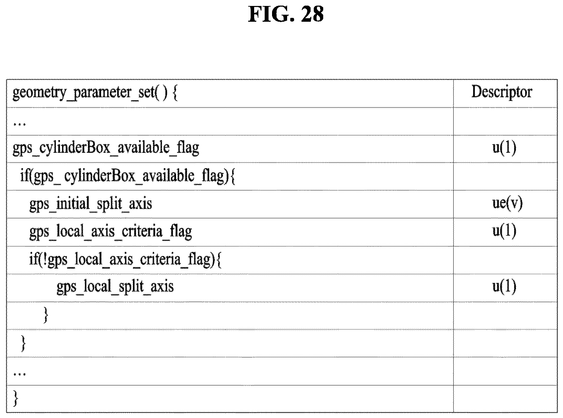

FIG. 28 shows an exemplary syntax of a geometry parameter set according to embodiments.

In the angular mode, motion estimation/compensation information may be added to the GPS in the bitstream of FIG. 26 to be signaled.

gps_cylinderBox_available_flag: This is signaling to pass the information in sps_cylinderBox_available_flag to GPS, the geometry parameter set, for geometry coding. If sps_cylinderBox_available_flag is true, gps_cylinderBox_available_flag is true; if sps_cylinderBox_available_flag is false, gps_cylinderBox_available_flag is false. If sps_cylinderBox_available_flag is not given, the corresponding information may be independently signaled by the GPS.

gps initial_split axis: Indicates the initial reference axis forming the basis of splitting a cylinder box into PUs. This information may be received through sps_initial_split_axis or may be independently declared in the GPS. The split axis information may be signaled by one of the following values

gps_initial_split_axis Description

0000 Radius
0001 Azimuth
0010 Elevation
0011 Radius + Azimuth
0100 Radius + Elevation
0101 Azimuth + Elevation
0110 Radius + Elevation + Azimuth
0111- 1111 reserved

gps_local_axis_criteria_flag: A flag indicating whether to perform further splitting based on an axis the same as or different from the initial split axis when further splitting is needed for local motion estimation after splitting the cylinder box into PUs. If the value is true, it signals splitting by the initially declared split axis. If the value is false, it signals a new split axis.

gps_local_split_axis: Signals the reference information about the sub PU split axis if the gps_local_axis_criteria_flag is false, which is a signal for splitting based on an axis other than the initial split axis when local motion estimation needs to operate based on a further split PU after a cylinder box is split into PUs. The axis information may be signaled as one of the following values When gps_local_split_axis is 0, 1, or 2, it is signaled when splitting based on a single axis of radius, azimuth, or elevation is required, respectively; 3, 4, or 5 may indicate splitting based on a combination of two axes (radius + azimuth, radius+elevation, or azimuth+elevation); and 6 may indicate simultaneous splitting along all three axes.

gps_local_split_axis Description
0000 Radius
0001 Azimuth
0010 Elevation
0011 Radius + Azimuth
0100 Radius + Elevation
0101 Azimuth + Elevation
0110 Radius + Elevation + Azimuth
0111 - 1111 reserved

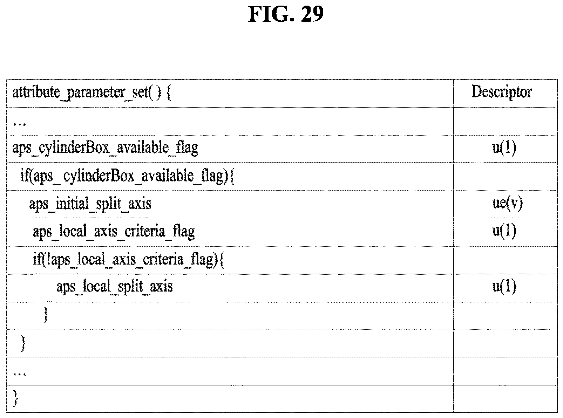

FIG. 29 shows an exemplary syntax of an attribute parameter set according to embodiments.

In the angular mode, motion estimation/compensation related information may be added to the APS of the bitstream of FIG. 26 and signaled.

aps_cylinderBox_available_flag: This is signaling to pass the information of sps_cylinderBox_available_flag to the APS, which is an attribute parameter set, so as to be applied in performing attribute coding. If sps_cylinderBox_available_flag is true, aps_cylinderBox_available_flag is true; if sps_cylinderBox_available_flag is false, aps_cylinderBox_available_flag is false. If sps_cylinderBox_available_flag is not given, corresponding information may be signaled independently by the APS.

aps initial_split axis: May indicate information about the initial reference axis when splitting a cylinder box into PUs. This information may be received from sps_initial_split_axis or may be declared independently in the APS. The split axis information may be signaled as one of the following values.

aps_initial_split_axis Description
0000 Radius
0001 Azimuth
0010 Elevation
0011 Radius + Azimuth
0100 Radius + Elevation
0101 Azimuth + Elevation
0110 Radius + Elevation + Azimuth
0111 - 1111 reserved

aps_local_axis_criteria_flag: A flag indicating whether to perform further splitting based on an axis the same as or different from the initial split axis when further splitting is needed for local motion estimation after splitting the cylinder box into PUs. If the value is true, it signals splitting by the initially declared split axis. If the value is false, it signals a new split axis.

apsLocalSplitAxis: Signals the reference information about the sub PU split axis if the gps_local_axis_criteria_flag is false, which is a signal for splitting based on an axis other than the initial split axis when local motion estimation needs to operate based on a further split PU after a cylinder box is split into PUs. The axis information may be signaled as one of the following values When aps_local_split_axis is 0, 1, or 2, it is signaled when splitting based on a single axis of radius, azimuth, or elevation is required, respectively; 3, 4, or 5 may indicate splitting based on a combination of two axes (radius + azimuth, radius+elevation, or azimuth+elevation); and 6 may indicate simultaneous splitting along all three axes. The value may be the same as or different from that of gps local_split axis.

aps_local_split_axis Description
0000 Radius
0001 Azimuth
0010 Elevation
0011 Radius + Azimuth
0100 Radius + Elevation
0101 Azimuth + Elevation
0110 Radius + Elevation + Azimuth
0111- 1111 reserved

FIG. 30 is a flow diagram illustrating an example device/method of transmitting point cloud data according to embodiments.

Each of the steps or components illustrated in FIG. 30 may represent an operation, or may represent a component by software, hardware, or a combination thereof, including one or more processors or integrated circuits configured to communicate with one or more memories to perform the operation. The components performing the operations illustrated in FIG. 30 may be referred to as modules, units, processors, or the like.

The point cloud data transmission device/method of FIG. 30 may be a device/method corresponding to the transmission device 10000 of FIG. 1, the transmission method of FIG. 2, the encoder of FIG. 4, the transmission device of FIG. 12, the devices of FIG. 14, the transmission method/device of FIG. 16, and the transmission method of FIG. 32. The transmission device/method of FIG. 30 may encode point cloud data in connection or combination with the devices/methods of FIGS. 1, 2, 4, 12, 14, and 16, and/or the transmission method of FIG. 32.

Referring to FIG. 30, point cloud data is input and data quantization/voxelization 3010 is performed to facilitate compression processing. After the data quantization/voxelization, intra prediction is checked for the point cloud data (3012). If the data is an intra prediction frame (y), geometry intra prediction is performed. If the data is not an intra prediction frame (no), the current frame and reference frame are converted from Cartesian coordinates to spherical coordinates for inter-prediction (3016). Then, the cylinder box is split into PUs (3018). Then, when the flag information indicating whether to perform global motion estimation is true, global motion estimation 3022 and compensation 3024 are performed, and then local motion estimation 3026 is performed. When the flag information indicating whether to perform is false, the local motion estimation 3026 is performed.

To determine whether to perform further splitting into sub-PUs in performing local motion estimation, a cost for local motion estimation before splitting is compared with a cost for local motion estimation after the splitting (3028). When it is more advantageous to perform the estimation before the splitting as a result of the cost comparison, no further splitting into sub-PUs is performed. When it is more advantageous to perform the estimation after the splitting, further splitting into sub-PUs is performed.

Then, local motion estimation is performed on each sub-PU. When local motion estimation on the PU and all sub-PUs is completed, local motion compensation is performed on each PU (3030). Then, the point cloud data represented as spherical coordinates is converted to Cartesian coordinates and returned (3032). Then, geometry reconstruction and attribute encoding are performed based on compensated point cloud data obtained through prediction and compensation based on the reference frame (3034) to transmit a bitstream according to embodiments.

Motion compensation may be performed prior to encoding such that the current frame may be used as a reference frame for the next frame. At the same time, motion vectors may be sent to the decoder to be used for motion compensation during decoding.

Geometry information, along with attribute information belonging to that geometry, may be used in generating PUs according to embodiments.

Each step of the point cloud data processing process illustrated in FIG. 30 may be performed by components according to software, hardware, or a combination thereof. In other words, FIG. 30 may illustrate not only a method of transmitting point cloud data, but also components of a point cloud data transmission device that perform each step.

FIG. 31 is a flow diagram illustrating an exemplary device/method for receiving point cloud data according to embodiments.

Each of the steps or components illustrated in FIG. 31 may represent an operation, or may represent a component by software, hardware, or a combination thereof, including one or more processors or integrated circuits configured to communicate with one or more memories to perform the operation. The components performing the operations illustrated in FIG. 31 may be referred to as modules, units, processors, or the like.

The point cloud data reception device/method of FIG. 31 may correspond to the reception device 20000 of FIG. 1, the reception method of FIG. 2, the decoder of FIG. 11, the reception device of FIG. 13, the devices of FIG. 14, and/or the reception method of FIG. 33. The reception device/method of FIG. 31 may decode the point cloud data in connection or combination with the devices/methods of FIGS. 1, 2, 11, 13, and/or 14, and the reception method of FIG. 33.

The point cloud data reception device/method of FIG. 31 may correspond to a reverse process to the transmission device/method of FIG. 30.

The reception device/method according to the embodiments may perform entropy decoding on the received bitstream and reconstruct the original point cloud based on the residuals, which are the prediction errors for each point, through dequantization 3112 and inverse transformation.

When the frame is for intra prediction, the conventional intra prediction method is applied and the geometry information about the point cloud is updated. When the frame is not for intra prediction, the coordinates are converted to spherical coordinates (3120). Then, a flag indicating whether to perform global motion compensation is checked (3122). When the value of the flag is true, a global motion matrix is decoded (3124) and compensation is performed (3126). It is checked whether the PU is a PU to be split (3128). If the PU is a PU to be split, the PU is further split (3130) and then it is checked whether to perform further splitting for each sub-PU. If the split flag is false, the motion vector of the PU is decoded (3132).

After compensating for the decoded motion vector (3134), the point cloud data is converted into Cartesian coordinates (3136) and the point cloud is updated (3138). The reconstructed point cloud geometry is stored in a frame memory and may be used as predictive information for data in the PU range of the next frame. Once the geometry reconstruction is completed, the color/reflectance information is inversely transformed to include attribute information at the corresponding position, and the reconstructed point cloud contents are delivered to the renderer. This receiver operation may be applied to geometry coding or attribute coding.

Each step of the point cloud data processing process illustrated in FIG. 31 may be performed by components according to software, hardware, or a combination thereof. In other words, FIG. 30 may illustrate not only a method of transmitting point cloud data, but also components of a point cloud data transmission device that perform each step.

FIG. 32 is a flow diagram illustrating an exemplary method of transmitting point cloud data according to embodiments.

Each of the steps or components illustrated in FIG. 32 may represent an operation, or may represent a component by software, hardware, or a combination thereof, including one or more processors or integrated circuits configured to communicate with one or more memories to perform the operation. The components performing the operations illustrated in FIG. 32 may be referred to as modules, units, processors, or the like.

The point cloud data transmission method of FIG. 32 may correspond to the transmission device 10000 of FIG. 1, the transmission method of FIG. 2, the encoder of FIG. 4, the transmission device of FIG. 12, the devices of FIG. 14, the transmission method/device of FIG. 16, and the transmission method of FIG. 30. The transmission method of FIG. 32 may encode point cloud data in connection or combination with the devices/methods of FIGS. 1, 2, 4, 12, 14, and 16, and/or the transmission device/method of FIG. 30.

Referring to FIG. 32, the transmission method according to the embodiments includes step S3200 of encoding point cloud data and step S3210 of transmitting a bitstream containing the point cloud data. The point cloud data includes geometry data and attribute data. The step S3200 of encoding the point cloud data may include encoding the geometry data of the point cloud data and encoding the attribute data of the point cloud data.

Referring to FIG. 16, the encoding of the point cloud data further includes generating a cylinder box based on the geometry data, splitting the cylinder box into PUs, and performing motion estimation based on the PUs. As described with reference to FIG. 17, the generated cylinder box may have a distance from a center axis of the point cloud data to a farthest point as a radius. In other words, the generating of the cylinder box includes generating the cylinder box having the distance from the center axis of the point cloud data to the farthest point as a radius. The encoding according to the embodiments may further include converting the point cloud data to spherical coordinates.

Further, referring to FIGS. 18 to 20, the splitting of the cylinder box into PUs according to the embodiments may include splitting the cylinder box into PUs based on at least one of azimuth, radius, or elevation.

Also, as shown in FIGS. 21 and 22, in the motion estimation, a distance between a point belonging to a PU and a point belonging to a search region corresponding to the PU in the reference frame may be calculated, and points belonging to the PU may be sampled based on the distance. Since points that are recognized to be similar to points in the reference frame are selected and sampled as target points, the accuracy of motion prediction may be improved.

In addition, a search region may be defined in the motion estimation, as shown in FIG. 25. The search region corresponding to the PU in the reference frame may be a region expanded from the PU at the same rate along the azimuth, radius, and elevation axes, respectively.

Referring to FIGS. 27 to 29, the bitstream transmitted by the transmission device/method according to embodiments contains flag information indicating whether the motion estimation is performed based on the cylinder box. The bitstream may further contain information indicating a method of splitting the cylinder box.

FIG. 33 is a flow diagram illustrating an exemplary method of receiving point cloud data according to embodiments.

Each of the steps or components illustrated in FIG. 33 may represent an operation, or may represent a component by software, hardware, or a combination thereof, including one or more processors or integrated circuits configured to communicate with one or more memories to perform the operation. The components performing the operations illustrated in FIG. 33 may be referred to as modules, units, processors, or the like.

The point cloud data reception device/method of FIG. 33 may correspond to the reception device 20000 of FIG. 1, the reception method of FIG. 2, the decoder of FIG. 11, the reception device of FIG. 13, the devices of FIG. 14, and/or the reception method of FIG. 31. The reception /method of FIG. 33 may decode the point cloud data in connection or combination with the devices/methods of FIGS. 1, 2, 11, 13, and/or 14, and the reception method of FIG. 31.

The reception method according to the embodiments includes step S3300 of receiving a bitstream containing point cloud data and step S3310 of decoding the point cloud data.

Referring to FIG. 31, step S3310 of decoding the point cloud data may include converting the point cloud data to spherical coordinates (3120 in FIG. 31). It may further include generating a cylinder box for the point cloud data (3130 in FIG. 31), splitting the cylinder box into PUs (3130 in FIG. 31), and performing motion compensation based on the PUs (3134 in FIG. 31).

Referring to FIGS. 27 to 29, the bitstream contains flag information indicating whether the motion estimation is performed based on the cylinder box. When the flag information is a specific value, the cylinder box is generated.

Further, the bitstream may contain information indicating a method of splitting the cylinder box, and the splitting may include splitting the cylinder box into PUs based on the information indicating the method of splitting the cylinder box.

Referring to FIGS. 18 to 20, the method of splitting the cylinder box includes at least one of azimuth, radius, or elevation as a basis of the splitting.

A reception device according to embodiments may include a receiver configured to receive point cloud data, a decoder configured to decode the point cloud data, and a renderer configured to render the point cloud data.

The transmission/reception device/method according to the embodiments proposes a method of motion prediction/compensation for inter-frame motion prediction of point cloud content in consideration of the capture characteristics of the point cloud subjected to the prediction. To reflect the capture characteristics, a cylinder box, rather than a conventional octree structure or cube/cuboid shape, is defined and motion estimation/compensation is performed in a spherical coordinate system.

By reflecting the capture characteristics of the point cloud data, the transmission/reception device/method according to the embodiments may be allowed to perform motion estimation/compensation among similar points. Thereby, prediction accuracy may be improved.

Further, as the transmission/reception device/method according to the embodiments is allowed to perform estimation by grouping points having high similarity, the cases of further splitting may be reduced. Accordingly, less encoding time and decoding time may be required than the octree splitting method.

Operations according to the embodiments described in this specification may be performed by a transmission/reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or combinations thereof. The firmware, software, and/or combinations thereof may be stored in the processor or the memory.

Embodiments have been described from the method and/or device perspective, and descriptions of methods and devices may be applied so as to complement each other.

Although the accompanying drawings have been described separately for simplicity, it is possible to design new embodiments by merging the embodiments illustrated in the respective drawings. Designing a recording medium readable by a computer on which programs for executing the above-described embodiments are recorded as needed by those skilled in the art also falls within the scope of the appended claims and their equivalents. The devices and methods according to embodiments may not be limited by the configurations and methods of the embodiments described above. Various modifications can be made to the embodiments by selectively combining all or some of the embodiments. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same.

Executable instructions for performing the method/operations of the device according to the embodiments may be stored in a non-transitory CRM or other computer program products configured to be executed by one or more processors, or may be stored in a transitory CRM or other computer program products configured to be executed by one or more processors.

In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this specification, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in this specification, the term "or" should be interpreted as indicating "and/or." For instance, the expression "A or B" may mean 1) only A, 2) only B, or 3) both A and B. In other words, the term "or" used in this document should be interpreted as indicating "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signals unless context clearly dictates otherwise.

The terms used to describe the embodiments are used for the purpose of describing specific embodiments, and are not intended to limit the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if' and "when" are not limited to an optional case and are intended to be interpreted, when a specific condition is satisfied, to perform the related operation or interpret the related definition according to the specific condition.

Operations according to the embodiments described in this specification may be performed by a transmission/reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or a combination thereof. The firmware, software, and/or a combination thereof may be stored in the processor or the memory.

The operations according to the above-described embodiments may be performed by the transmission device and/or the reception device according to the embodiments. The transmission/reception device includes a transmitter/receiver configured to transmit and receive media data, a memory configured to store instructions (program code, algorithms, flowcharts and/or data) for a process according to embodiments, and a processor configured to control operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments.

[Mode for Disclosure]

As described above, related contents have been described in the best mode for carrying out the embodiments.

[Industrial Applicability]

As described above, the embodiments may be fully or partially applied to the point cloud data transmission/reception device and system. It will be apparent to those skilled in the art that various changes or modifications can be made to the embodiments within the scope of the embodiments. Thus, it is intended that the embodiments cover the modifications and variations of this disclosure provided they come within the scope of the appended claims and their equivalents.

**Claims**

1. A method of transmitting point cloud data, the method comprising:

   encoding point cloud data; and
   transmitting a bitstream containing the point cloud data,
   wherein the encoding of the point cloud data comprises:

      encoding geometry data of the point cloud data; and
      encoding attribute data of the point cloud data.

2. The method of claim 1, wherein the encoding further comprises:

   generating a cylinder box based on the geometry data;
   splitting the cylinder box into prediction units (PUs); and
   performing motion estimation based on the PUs.

3. The method of claim 2, wherein the generating of the cylinder box comprises:
   generating the cylinder box having a radius equal to a distance from a center axis of the point cloud data to a point farthest from the center axis of the point cloud data.

4. The method of claim 2, wherein the splitting comprises:
   splitting the cylinder box into the PUs based on at least one of azimuth, radius, or elevation.

5. The method of claim 4, wherein the motion estimation comprises:

   generating a search region corresponding to the PUs in a reference frame,
   wherein the search region is expanded from the PUs at the same rate along axes of the azimuth, radius, and elevation.

6. The method of claim 5, wherein the motion estimation comprises:

   calculating distances between points belonging to the PUs and a point belonging to the search region; and
   sampling points belonging to the PUs based on the distances.

7. The method of claim 6, wherein the encoding further comprises:
   converting the point cloud data to spherical coordinates.

8. The method of claim 7, wherein the bitstream contains flag information indicating whether the motion estimation is performed based on the cylinder box.

9. The method of claim 8, wherein the bitstream contains information indicating a method of splitting the cylinder box.

10. A device for transmitting point cloud data, the device comprising:

    an encoder configured to encode point cloud data comprising geometry data and attribute data; and
    a transmitter configured to transmit a bitstream containing the point cloud data.

11. A method of receiving point cloud data, the method comprising:

    receiving a bitstream containing point cloud data; and
    decoding the point cloud data.

12. The method of claim 11, wherein the decoding comprises:
   converting the point cloud data to spherical coordinates.

13. The method of claim 12, wherein the decoding further comprises:

   generating a cylinder box for the point cloud data;
   splitting the cylinder box into prediction units (PUs); and
   performing motion compensation based on the PUs.

14. The method of claim 13, wherein the bitstream contains flag information indicating whether the motion estimation is performed based on the cylinder box,
   wherein the generating of the cylinder box comprises:
   generating the cylinder box when the flag information is a specific value.

15. The method of claim 14, wherein the bitstream contains information indicating a method of splitting the cylinder box,

   wherein the splitting comprises
   splitting the cylinder box into the PUs based on the information indicating the method of splitting the cylinder box.

16. The method of claim 15, wherein the method of splitting the cylinder box comprises at least one of azimuth, radius, and elevation as a basis for the splitting.

17. A device for receiving point cloud data, the device comprising:

   a receiver configured to receive a bitstream containing point cloud data; and
   a decoder configured to decode geometry data and attribute data of the point cloud data.

# FIG. 1

# FIG. 2

ACQUISITION — Ply File -geometry -attribute → ENCODING — ENCODED -geometry -attribute bitstream → TRANSMISSION → DECODING — DECODED -geometry -attribute → RENDERING

HEAD ORIENTATION, VIEWPORT INFORMATION

FEEDBACK

HEAD ORIENTATION, VIEWPORT INFORMATION

20000  20001  20002  20003  20004  20005

FIG. 3

FIG. 4

positions          attributes

40000 — Transform coordinates

40001 — Quantize and remove points (voxelize)

40002 — Analyze octree

40003 — Analyze surface approximation

40005 —

40004 — Arithmetic encode

Reconstruct geometry

40006 — Transform colors

40007 — Transfer attributes

40008 —

RAHT

Gnnerate LOD — 40009

Lifting — 40010

40011 — Quantize coefficients

40012 — Arithmetic encode

geometry bitstream          atribute bitstream

FIG. 5

FIG. 6

# FIG. 7

$$1 + 2 + 4 + 8 = 15$$

FIG. 8

Level of details

# FIG. 9

| | |
|---|---|
| Original order | P0, P1, P2, P3, P4, P5, P6, P7, P8, P9 |
| LOD-based order | P0, P5, P4, P2 \| P1, P6, P3 \| P9, P8, P7 |

LOD0
LOD1
LOD2

FIG. 10

# FIG. 11

geomerty
bitstream

attributes
birsrteam

11000 — Arithmerix decode

11001 — Synthesize octree

11002 — synthesize surface approximation

11003 — Reconstruct geometry

11004 — Inverse transform coordinates

11005 — Arithmerix decode

11006 — Inverse quantize

11007

RAHT

11008 — Gnnerate LOD

11009 — Inverse lifring

11010 — Inverse transform colors

position

attributes

FIG. 12

FIG. 13

| 13000 | Receiver |
| 13001 | Reception processor |

Geometry bitstream                                    13006                  Attribute bitstream

Set value, etc.

| 13002 | Arithmetic decoder | Metadata parser | Arithmetic decoder | 13007 |
| 13003 | Occupancy code-based octree reconstruction processor | | Inverse quantization processor | 13008 |
| 13004 | Surface model processor (triangle reconstruction, up-sampling, voxelization) | | Prediction /lifting/RAHT inverse transform processor | 13009 |
| 13005 | Inverse quantization processor | | Color inverse transform processor | 13010 |

Sharing reconstructed position values

| | Renderer | 13011 |

FIG. 14

Home Appliance — 1450

1460 — AI Server

Smartphone — 1440

1400

1470 — HMD

Network
( 5G )

XR devive — 1430

1410 — Robot

Self - Driving Vehicle — 1420

**FIG. 15**

GOF(Group Of Frame)

FIG. 16

EP 4 387 230 A1

# FIG. 17

1710

**FIG. 18**

FIG. 19

# FIG. 20

FIG. 21

# FIG. 22

Calculate distance $D = \overline{P_{ref}P_{cur}}$ — 2210

$D < threshold$ — 2220

no

yes

register $P_{cur}$ as target point — 2230

Sampling target points — 2240

# FIG. 23

Radius + Azimuth

2310

2320

PU

Search window

# FIG. 24

**FIG. 25**

(a)

$$SearchWindow_{radius} = [PU_{radius,min} - \frac{\Delta radius}{R}, PU_{radius.max} + \frac{\Delta radius}{R}]$$

$$SearchWindow_{azimuth} = [PU_{azimuth,min} - \frac{\Delta azimuth}{R}, PU_{azimuth.max} + \frac{\Delta azimuth}{R}]$$

(b)

$$SearchWindow_{elevation} = [PU_{elevation,min} - \frac{\Delta elevation}{R}, PU_{elevation.max} + \frac{\Delta elevation}{R}]$$

slice 0

slice n

| SPS | GPS | $APS_0$ | $APS_1$ | TPS | $Geom_0^0$ | $Attr_0^0$ | $Attr_1^0$ | $\cdots$ | $Geom_0^n$ | $Attr_0^n$ | $Attr_1^n$ |

Geom_slice_header | Geom_slice_data

Tile(0).tile_bounding_box_xyz0;
Tile(0).tile_bounding_box_whd;
......
Tile(n).tile_bounding_box_xyz0;
Tile(n).tile_bounding_box_whd;

geom_ geom_ parameter_set_id;
geom_tile_id;
geom_slice_id;
geomBoxOrigin;
geom_box_log2_scale;
geom_max_node_size_log2;
geom_num_points;

**FIG. 26**

# FIG. 27

| seq_parameter_set_rbsp( ) { | Descriptor |
|---|---|
| … | |
| sps_cylinderBox_available_flag | u(1) |
| if(sps_cylinderBox_available_flag) { | |
| sps_Maximum_distance | ue(v) |
| sps_initial_split_axis | ue(v) |
| sps_search_range_ratio | ue(v) |
| } | |
| … | |
| } | |

# FIG. 28

| geometry_parameter_set( ) { | Descriptor |
|---|---|
| ... | |
| gps_cylinderBox_available_flag | u(1) |
|   if(gps_ cylinderBox_available_flag){ | |
|     gps_initial_split_axis | ue(v) |
|     gps_local_axis_criteria_flag | u(1) |
|     if(!gps_local_axis_criteria_flag){ | |
|        gps_local_split_axis | u(1) |
|     } | |
|   } | |
| ... | |
| } | |

# FIG. 29

| attribute_parameter_set( ) { | Descriptor |
|---|---|
| ... | |
| aps_cylinderBox_available_flag | u(1) |
|   if(aps_ cylinderBox_available_flag){ | |
|     aps_initial_split_axis | ue(v) |
|     aps_local_axis_criteria_flag | u(1) |
|     if(!aps_local_axis_criteria_flag){ | |
|       aps_local_split_axis | u(1) |
|     } | |
|   } | |
| ... | |
| } | |

FIG. 30

# FIG. 31

Bit stream

Entropy decoding —3110

Dequantization —3112

Inverse transform coordinates —3114

Intra? —3116

N                    Y

Convert to spherical coordinates — 3120

Global motion enable? — 3122

Y                N

Decoding Global motion matrix

Global motion compensation

3124              3126

Decoding for intra frame —3118

Split? — 3128

N                Y

PU split on cylinder box —3130

Decoding motion vector — 3132

Motion compensation —3134

Convert to Cartesian coordinates —3136

Update PointCloud —3138

reconstruct Point Cloud geometry

Attribute coding

reconstructed Point Cloud Contents

FIG. 32

| | |
|---|---|
| Encode point cloud data | S3200 |

| | |
|---|---|
| Transmit bitstream containing point cloud data | S3210 |

FIG. 33

| | |
|---|---|
| Receive bitstream containing point cloud data | ~ S3300 |

| | |
|---|---|
| Decode point cloud data | ~ S3310 |

## INTERNATIONAL SEARCH REPORT

| International application No. |
|---|
| **PCT/KR2022/011905** |

### A. CLASSIFICATION OF SUBJECT MATTER

**H04N 19/597**(2014.01)i; **H04N 19/513**(2014.01)i; **H04N 19/132**(2014.01)i; **H04N 19/119**(2014.01)i; **H04N 19/105**(2014.01)i; **G06T 9/00**(2006.01)i

According to International Patent Classification (IPC) or to both national classification and IPC

### B. FIELDS SEARCHED

Minimum documentation searched (classification system followed by classification symbols)

H04N 19/597(2014.01); G01S 17/89(2006.01); G06T 3/00(2006.01); G06T 9/00(2006.01); G06T 9/40(2006.01); H04N 19/20(2014.01); H04N 19/52(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포인트 클라우드(point cloud), 지오메트리(geometry), 어트리뷰트(attribute), 예측유닛(Prediction Unit, PU), 분할(partitioning), 모션 에스티메이션(motion estimation), 실린더(cylinder), 박스(box), 애지무스(Azimuth), 래디우스(radius), 엘리베이션(elevation)

### C. DOCUMENTS CONSIDERED TO BE RELEVANT

| Category* | Citation of document, with indication, where appropriate, of the relevant passages | Relevant to claim No. |
|---|---|---|
| X | WO 2021-060850 A1 (LG ELECTRONICS INC.) 01 April 2021 (2021-04-01)<br>See paragraphs [0236], [0243] and [0343]-[0347]; and claims 1-2 and 11. | 1,10-12,17 |
| Y | | 2-3,13-15 |
| A | | 4-9,16 |
| Y | US 2021-0192798 A1 (BLACKBERRY LIMITED) 24 June 2021 (2021-06-24)<br>See paragraph [0055]; and claims 1 and 3. | 2-3,13-15 |
| A | US 2021-0185331 A1 (APPLE INC.) 17 June 2021 (2021-06-17)<br>See paragraphs [0004]-[0017]; and claims 21-29. | 1-17 |
| A | US 2019-0394484 A1 (THE REGENTS OF THE UNIVERSITY OF CALIFORNIA) 26 December 2019 (2019-12-26)<br>See paragraphs [0018]-[0027]; and claims 1-9. | 1-17 |

✓ Further documents are listed in the continuation of Box C.    ✓ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 November 2022** | **28 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2022/011905** |

**C.     DOCUMENTS CONSIDERED TO BE RELEVANT**

| Category* | Citation of document, with indication, where appropriate, of the relevant passages | Relevant to claim No. |
| --- | --- | --- |
| A | US 2020-0394822 A1 (TENCENT AMERICA LLC) 17 December 2020 (2020-12-17)<br>See paragraphs [0005]-[0014]; and claims 1-10. | 1-17 |

Form PCT/ISA/210 (second sheet) (July 2022)

**INTERNATIONAL SEARCH REPORT**
Information on patent family members

International application No.

**PCT/KR2022/011905**

| Patent document<br>cited in search report | | | Publication date<br>(day/month/year) | Patent family member(s) | | | Publication date<br>(day/month/year) |
|---|---|---|---|---|---|---|---|
| WO | 2021-060850 | A1 | 01 April 2021 | None | | | |
| US | 2021-0192798 | A1 | 24 June 2021 | EP | 3633621 | A1 | 08 April 2020 |
| | | | | WO | 2020-069600 | A1 | 09 April 2020 |
| US | 2021-0185331 | A1 | 17 June 2021 | CN | 111133476 | A | 08 May 2020 |
| | | | | KR | 10-2020-0038534 | A | 13 April 2020 |
| | | | | KR | 10-2021-0154893 | A | 21 December 2021 |
| | | | | KR | 10-2340774 | B1 | 20 December 2021 |
| | | | | US | 10607373 | B2 | 31 March 2020 |
| | | | | US | 10699444 | B2 | 30 June 2020 |
| | | | | US | 10789733 | B2 | 29 September 2020 |
| | | | | US | 10867413 | B2 | 15 December 2020 |
| | | | | US | 10909725 | B2 | 02 February 2021 |
| | | | | US | 10909726 | B2 | 02 February 2021 |
| | | | | US | 10939129 | B2 | 02 March 2021 |
| | | | | US | 11012713 | B2 | 18 May 2021 |
| | | | | US | 11017566 | B1 | 25 May 2021 |
| | | | | US | 2019-0311500 | A1 | 10 October 2019 |
| | | | | US | 2019-0313110 | A1 | 10 October 2019 |
| | | | | US | 2020-0007867 | A1 | 02 January 2020 |
| | | | | US | 2020-0014953 | A1 | 09 January 2020 |
| | | | | US | 2020-0021847 | A1 | 16 January 2020 |
| | | | | US | 2020-0193645 | A1 | 18 June 2020 |
| | | | | US | 2020-0273208 | A1 | 27 August 2020 |
| | | | | US | 2021-0012536 | A1 | 14 January 2021 |
| | | | | US | 2021-0097725 | A1 | 01 April 2021 |
| | | | | US | 2021-0150765 | A1 | 20 May 2021 |
| | | | | US | 2021-0150766 | A1 | 20 May 2021 |
| | | | | US | 2021-0256735 | A1 | 19 August 2021 |
| | | | | US | 2021-0266597 | A1 | 26 August 2021 |
| | | | | US | 2022-0005228 | A1 | 06 January 2022 |
| | | | | WO | 2019-055963 | A1 | 21 March 2019 |
| US | 2019-0394484 | A1 | 26 December 2019 | None | | | |
| US | 2020-0394822 | A1 | 17 December 2020 | CN | 113574567 | A | 29 October 2021 |
| | | | | EP | 3983999 | A1 | 20 April 2022 |
| | | | | JP | 2022-518888 | A | 17 March 2022 |
| | | | | WO | 2020-251888 | A1 | 17 December 2020 |

Form PCT/ISA/210 (patent family annex) (July 2022)